(19) **Europäisches Patentamt**
**European Patent Office**
**Office européen des brevets**

(11) **EP 4 220 484 A1**

(12) **EUROPEAN PATENT APPLICATION**
published in accordance with Art. 153(4) EPC

(43) Date of publication:
**02.08.2023 Bulletin 2023/31**

(21) Application number: **20958046.3**

(22) Date of filing: **20.10.2020**

(51) International Patent Classification (IPC):
**G06N 3/02** (2006.01)

(52) Cooperative Patent Classification (CPC):
**G06N 3/02**

(86) International application number:
**PCT/CN2020/122289**

(87) International publication number:
**WO 2022/082463 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **SUN, Yan**
**Shenzhen, Guangdong 518129 (CN)**
• **WANG, Chao**
**Shenzhen, Guangdong 518129 (CN)**
• **WU, Yiqun**
**Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD, APPARATUS AND SYSTEM**

(57) Embodiments of this application provide a communication method, apparatus, and system. The method includes: A first device sends indication information to a second device, where the indication information indicates information about a first neural network model, the first neural network model includes a dedicated layer network and a common layer network, the dedicated layer network is dedicated to the first neural network model, and the common layer network is a common network of the first neural network model and a second neural network model; and the second device determines the information about the first neural network model based on the indication information. A neural network model is divided into a common layer network and a dedicated layer network, and the common layer network is a common network of different neural network models. Therefore, overall overheads of indicating information about the neural network model can be reduced. In addition, the information about the neural network model that is prestored by a user (for example, a terminal device) of the neural network model is correspondingly reduced, so that storage overheads of the information about the neural network model can be reduced.

FIG. 8(a)

**Description**

**TECHNICAL FIELD**

Embodiments of this application relate to the field of communication technologies, and in particular, to a communication method, apparatus, and system.

**BACKGROUND**

New radio (New radio, NR) is a popular standard for a next-generation cellular telecommunications network, covering three scenarios of enhanced mobile broadband (enhanced mobile broadband, eMBB), ultra-reliable and low-latency communication (ultra-reliable and low-latency communication, uRLLC), and massive machine type communication (massive machine type communication, mMTC). The eMBB scenario emphasizes a high throughput, the uRLLC scenario emphasizes high reliability and low latency, and the mMTC scenario emphasizes massive connections. New requirements of these scenarios bring great challenges to a modem communication system and also bring a new research direction for a modern communication theory. In an existing communication theory, an entire system is usually designed by using a top-bottom approach by using system structure information. This often encounters some problems when facing complex application scenarios and massive data that is difficult to model, which is also a limitation of the existing communication theory. Therefore, how to establish a new communication mechanism to meet a requirement of a future wireless communication system is an urgent problem to be resolved.

**SUMMARY**

Embodiments of this application provide a communication method, apparatus, and system, to reduce storage overheads of information about a neural network model and signaling overheads in a sending process.

According to a first aspect, an embodiment of this application provides a communication method. The method may be performed by a second device or another apparatus such as a chip used in a second device, and the second device may be a terminal device. The method includes: obtaining (for example, receiving) indication information from a first device, where the indication information indicates information about a first neural network model, the first neural network model includes a dedicated layer network and a common layer network, the dedicated layer network is dedicated to the first neural network model, and the common layer network is a common network of the first neural network model and a second neural network model; and determining the information about the first neural network model based on the indication information.

In embodiments of this application, that information, for example, information A, indicates another piece of information or feature, or for example, information B, may include:

the information A includes the information B;
the information A indicates the information B from one or more pieces of candidate information B, for example, indicates an index of the information B, where each piece of candidate information B in the one or more pieces of candidate information B corresponds to a unique index, which identifies the candidate information B; or
the information A is used to determine the information B, for example, the information B may be obtained by performing a mathematical operation or filtering on the information A.

Based on the foregoing solution, a neural network model includes a common layer network and a dedicated layer network, and the common layer network is a common network of different neural network models, so that overheads can be reduced. For example, overall overheads of indicating information about the neural network model can be reduced. In addition, the information about the neural network model that is pre-stored by a user (for example, a terminal device) of the neural network model is correspondingly reduced, so that storage overheads of the information about the neural network model can be reduced.

In an implementation method, the indication information may be carried in a broadcast message (for example, a master information block (master information block, MIB)), a system message (for example, a system information block (system information block, SIB)), a common message, radio resource control (radio resource control, RRC) signaling, a medium access control control element (medium access control control element, MAC CE) dedicated to the second device, and/or downlink control information (downlink control information, DCI) dedicated to the second device. The common message may be common DCI, a common MAC CE, or the like. Dedicated to the second device may also be referred to as second device-specific.

In embodiments of this application, the dedicated layer network is also referred to as a dedicated layer, the common layer network is referred to as a common layer, the information about the neural network model is referred to as neural network model information, and the neural network model may also be referred to as a neural network.

In a possible implementation method, after the information about the first neural network model is determined, the first neural network model may be determined based on the information about the first neural network model, or an existing first neural network model may be updated. Specifically, the first neural network model may be obtained by using the information about the first neural network model, or the existing first neural network model may be replaced. Alternatively, online training is performed on the existing first neural network model based on the information about the first neural network model, to obtain a trained and updated first neural network model. Optionally, before the existing first neural network model is updated, it is further determined that performance of the first neural network model corresponding to the information about the first neural network model is better than performance corresponding to the existing first neural network model.

In a possible implementation method, the information about the first neural network model includes at least one of the following: neural network cascaded structure information, common layer network structure information, a common layer network parameter, dedicated layer network structure information, and a dedicated layer network parameter. The neural network cascaded structure information includes cascaded structure information of the dedicated layer network and the common layer network.

Optionally, the neural network cascaded structure information indicates information about a connection structure between a dedicated layer and a common layer included in a neural network, for example, indicates an interconnection relationship between a neuron in the dedicated layer and a neuron in the common layer. The common layer network structure information indicates a quantity of common layers and an interlayer structure inside the common layers. The common layer network parameter indicates a weight, an offset, an activation function, and the like of each neuron in each of the common layers. The dedicated layer network structure information indicates a quantity of dedicated layers and an interlayer structure inside the dedicated layers. The dedicated layer network parameter indicates a weight, an offset, an activation function, and the like of each neuron in each of the dedicated layers.

Optionally, when the information about the first neural network model includes at least two of the following information: the neural network cascaded structure information, the common layer network structure information, the common layer network parameter, the dedicated layer network structure information, and the dedicated layer network parameter, the indication information may indicate the at least two pieces of information by using one or more messages. For example, when the information about the first neural network model includes at least one of the common layer network structure information and the common layer network parameter, and includes at least one of the neural network cascaded structure information, the dedicated layer network structure information, and the dedicated layer network parameter, the indication information includes first indication information and second indication information, where the first indication information indicates at least one of the common layer network structure information and the common layer network parameter, and the second indication information indicates at least one of the neural network cascaded structure information, the dedicated layer network structure information, and the dedicated layer network parameter. Optionally, the first indication information is carried in the MIB, the SIB, or the common message. The second indication information is carried in the RRC signaling, the MAC CE, or the DCI dedicated to the second device.

Based on the foregoing solution, the user (for example, a terminal device) of the neural network model can accurately determine the information about the neural network model.

In a possible implementation method, that the information about the first neural network model includes the neural network cascaded structure information includes: the information about the first neural network model indicates the neural network cascaded structure, or the information about the first neural network model indicates a configured neural network cascaded structure from a neural network cascaded structure candidate set.

Based on the foregoing solution, the neural network cascaded structure can be flexibly indicated.

In a possible implementation method, that the information about the first neural network model includes the common layer network structure information includes: the information about the first neural network model indicates the common layer network structure, or the information about the first neural network model indicates a configured common layer network structure from a common layer network structure candidate set.

Based on the foregoing solution, the common layer network structure can be flexibly indicated.

In a possible implementation method, that the information about the first neural network model includes common layer network parameter information includes: the information about the first neural network model indicates the common layer network parameter, or the information about the first neural network model indicates a configured common layer network parameter from a common layer network parameter candidate set.

Based on the foregoing solution, the common layer network parameter information can be flexibly indicated.

In a possible implementation method, that the information about the first neural network model includes the dedicated layer network structure information includes: the information about the first neural network model indicates the dedicated layer network structure, or the information about the first neural network model indicates a configured dedicated layer network structure from a dedicated layer network structure candidate set.

Based on the foregoing solution, the dedicated layer network structure information can be flexibly indicated.

In a possible implementation method, that the information about the first neural network model includes dedicated layer network parameter information includes: the information about the first neural network model indicates the dedicated layer network parameter, or the information about the first neural network model indicates a configured dedicated layer network parameter from a dedicated layer network parameter candidate set.

Based on the foregoing solution, the dedicated layer network parameter can be flexibly indicated.

In a possible implementation method, the indication information carries an index of the neural network cascaded structure information, an index of the dedicated layer network structure information, and an index of the dedicated layer network parameter. Alternatively, the indication information carries an index of the neural network cascaded structure information, an index of the dedicated layer network structure information, and the dedicated layer network parameter. Alternatively, the indication information carries an index of the neural network cascaded structure information, the dedicated layer network structure information, and the dedicated layer network parameter.

In a possible implementation method, configuration information is received from the first device, where the configuration information indicates one or more of the following content: a neural network cascaded structure information candidate set, a common layer network structure information candidate set, the common layer network parameter candidate set, a dedicated layer network structure information candidate set, and the dedicated layer network parameter candidate set.

Based on the foregoing solution, the configuration information is received from the first device (for example, a network device) in advance, and is used to configure one or more of the neural network cascaded structure information candidate set, the common layer network structure information candidate set, the common layer network parameter candidate set, the dedicated layer network structure information candidate set, and the dedicated layer network parameter candidate set. Therefore, subsequently, the first device needs to indicate only an index corresponding to information in the candidate set by using the indication information, to reduce overheads of indicating the information.

In a possible implementation method, auxiliary information is sent to the first device, where the auxiliary information indicates a wireless system parameter for a communication between the first device and a second device.

Based on the foregoing solution, the first device (for example, the network device) can determine, based on the auxiliary information, a parameter and structure information that correspond to the neural network model, to help improve precision of the neural network model.

In a possible implementation method, capability information is sent to the first device, where the capability information indicates one or more pieces of the following information:

(1) whether to support using a neural network to replace or implement a function of a communication module;
(2) whether to support a neural network structure in which the common layer network and the dedicated layer network are cascaded;
(3) whether to support receiving of the dedicated layer network structure information and/or the dedicated layer network parameter through signaling;
(4) stored dedicated layer network structure information predefined in a protocol or pre-configured;
(5) a stored dedicated layer network parameter predefined in the protocol or pre-configured;
(6) a memory space used to store the neural network cascaded structure information, the common layer network structure information, the common layer network parameter, the dedicated layer network structure information, and/or the dedicated layer network parameter; and
(7) computing power information used to run the neural network.

Based on the foregoing solution, the first device (for example, the network device) can determine, based on the capability information, the parameter and the structure information that correspond to the neural network model, and/or determine a manner of sending the indication information, to help improve the precision of the neural network model and reduce sending overheads of the indication information.

According to a second aspect, an embodiment of this application provides a communication method. The method may be performed by a first device or another apparatus such as a chip used in a first device, and the first device may be a network device or a terminal device. The method includes: determining indication information, where the indication information indicates information about a first neural network model, the first neural network model includes a dedicated layer network and a common layer network, the dedicated layer network is dedicated to the first neural network model, and the common layer network is a common network of the first neural network model and a second neural network model; and sending the indication information to a second device.

For descriptions of the indication information, the information about the first neural network model, and the like, refer to the first aspect. Details are not described again.

In a possible implementation method, configuration information is sent to the second device, where the configuration information indicates one or more of the following content: a neural network cascaded structure information candidate set, a common layer network structure information candidate set, a common layer network parameter candidate set, a dedicated layer network structure information candidate set, and a dedicated layer network parameter candidate set.

In a possible implementation method, auxiliary information is received from the second device, where the auxiliary information indicates a wireless system parameter for a communication between a first device and the second device. Optionally, it is determined, based on the auxiliary information, that neural network model information of the second device needs to be updated. Optionally, it is determined, based on the auxiliary information, that the wireless system parameter for a communication between the first device and the second device changes.

In a possible implementation method, capability information is received from the second device, where the capability information indicates one or more of the following information:

(1) whether to support using a neural network to replace or implement a function of a communication module;
(2) whether to support a neural network structure in which the common layer network and the dedicated layer network are cascaded;
(3) whether to support receiving of the dedicated layer network structure information and/or the dedicated layer network parameter through signaling;
(4) stored dedicated layer network structure information predefined in a protocol or pre-configured;
(5) a stored dedicated layer network parameter predefined in the protocol or pre-configured;
(6) a memory space used to store the neural network cascaded structure information, the common layer network structure information, the common layer network parameter, the dedicated layer network structure information, and/or the dedicated layer network parameter; and
(7) computing power information used to run the neural network.

According to a third aspect, an embodiment of this application provides a communication method. The method may be performed by a second device or another apparatus such as a chip used in the second device, and the second device may be a terminal device. The method includes: obtaining (receiving) first indication information from a first device, where the first indication information indicates common information of a first neural network model, the first neural network model includes a dedicated layer network and a common layer network, and the common information of the first neural network model includes information about the common layer network; and obtaining (for example, receiving) second indication information from the first device, where the second indication information indicates information about the dedicated layer network.

Based on the foregoing solution, a neural network model includes a common layer network and a dedicated layer network. The common layer network is a common network of neural network models of different terminal devices, and the dedicated layer network is a network independently used by a neural network model of each terminal device. Therefore, overall overheads of indicating information about the neural network model can be reduced. In addition, the information about the neural network model that is pre-stored by a user (for example, a terminal device) of the neural network model is correspondingly reduced, so that storage overheads of the information about the neural network model can be reduced.

In a possible implementation method, the information about the common layer network includes common layer network structure information and/or a common layer network parameter.

In a possible implementation method, the information about the dedicated layer network includes at least one of the following: neural network cascaded structure information, dedicated layer network structure information, and a dedicated layer network parameter. The neural network cascaded structure information includes cascaded structure information of the dedicated layer network and the common layer network.

In a possible implementation method, the first indication information is carried in an MIB, a system message (for example, an SIB), or a common message.

In a possible implementation method, the second indication information is carried in RRC signaling, a MAC CE, or DCI.

According to a fourth aspect, an embodiment of this application provides a communication method. The method may be performed by a first device or another apparatus such as a chip used in a first device, and the first device may be a network device or a terminal device. The method includes: sending first indication information to a second device, where the first indication information indicates common information of a first neural network model, the first neural network model includes a dedicated layer network and a common layer network, and the common information of the first neural network model includes information about the common layer network; and sending second indication information to the second device, where the second indication information indicates information about the dedicated layer network.

For descriptions of the information about the common layer network, the information about the dedicated layer network, the first indication information, the second indication information, and the like, refer to the third aspect. Details are not described again.

According to a fifth aspect, an apparatus is provided, where the apparatus may be a second device, or may be an apparatus in a second device, or may be an apparatus that can be used together with a second device. In a design, the apparatus may include modules that are in one-to-one correspondence with the methods/operations/steps/actions described in the first aspect. The modules may be implemented by using a hardware circuit, software, or a combination of a hardware circuit and software. In a design, the apparatus may include a processing module and a communication module, for example:

The communication module is configured to obtain indication information from a first device, where the indication information indicates information about a first neural network model, the first neural network model includes a dedicated layer network and a common layer network, the dedicated layer network is dedicated to the first neural network model, and the common layer network is a common network of the first neural network model and a second neural network model.

A determining module is configured to determine the information about the first neural network model based on the indication information.

According to a sixth aspect, an apparatus is provided, where the apparatus may be a first device, or may be an apparatus in a first device, or may be an apparatus that can be used together with a first device. In a design, the apparatus may include modules that are in one-to-one correspondence with the methods/operations/steps/actions described in the second aspect. The modules may be implemented by using a hardware circuit, software, or a combination of a hardware circuit and software. In a design, the apparatus may include a processing module and a communication module, for example:

The processing module is configured to determine indication information, where the indication information indicates information about a first neural network model, the first neural network model includes a dedicated layer network and a common layer network, the dedicated layer network is dedicated to the first neural network model, and the common layer network is a common network of the first neural network model and a second neural network model.

The communication module is configured to send the indication information to a second device.

According to a seventh aspect, an apparatus is provided, where the apparatus may be a second device, or may be an apparatus in a second device, or may be an apparatus that can be used together with a second device. In a design, the apparatus may include modules that are in one-to-one correspondence with the methods/operations/steps/actions described in the third aspect. The modules may be implemented by using a hardware circuit, software, or a combination of the hardware circuit and the software. In a design, the apparatus may include a processing module and a communication module, for example:

The communication module is configured to obtain first indication information from a first device, where the first indication information indicates common information of a first neural network model, the first neural network model includes a dedicated layer network and a common layer network, and the common information of the first neural network model includes information about the common layer network; and further configured to receive second indication information from the first device, where the second indication information indicates information about the dedicated layer network. The processing module is configured to process the first indication information and the second indication information that are received by the communication module.

According to an eighth aspect, an apparatus is provided, where the apparatus may be a first device, or may be an apparatus in a first device, or an apparatus that can be used together with a first device. In a design, the apparatus may include modules that are in one-to-one correspondence with the methods/operations/steps/actions described in the fourth aspect. The modules may be implemented by using a hardware circuit, software, or a combination of the hardware circuit and the software. In a design, the apparatus may include a processing module and a communication module, for example:

The communication module is configured to send first indication information to a second device, where the first indication information indicates common information of a first neural network model, the first neural network model includes a dedicated layer network and a common layer network, and the common information of the first neural network model includes information about the common layer network; and further configured to send second indication information to the second device, where the second indication information indicates information about the dedicated layer network. The processing module is configured to generate the first indication information and the second indication information.

According to a ninth aspect, an embodiment of this application provides an apparatus, including a processor, configured to implement the method described in the first aspect. The apparatus may further include a memory, configured to store instructions and data. The memory is coupled to the processor, and when executing the instructions stored in the memory, the processor can implement the method described in the first aspect. The apparatus may further include a communication interface. The communication interface is used by the apparatus to communicate with another device. For example, the communication interface may be a transceiver, a circuit, a bus, a module, a pin, or another type of communication interface. In a possible device, the apparatus includes:

a memory, configured to store program instructions; and
a processor, configured to obtain indication information from a first device through a communication interface, where the indication information indicates information about a first neural network model, the first neural network model includes a dedicated layer network and a common layer network, the dedicated layer network is dedicated to the first neural network model, and the common layer network is a common network of the first neural network model and a second neural network model; and determine the information about the first neural network model based on the indication information.

According to a tenth aspect, an embodiment of this application provides an apparatus, including a processor, configured to implement the method described in the second aspect. The apparatus may further include a memory, configured to store instructions and data. The memory is coupled to the processor, and when executing the instructions stored in the memory, the processor can implement the method described in the second aspect. The apparatus may further include a communication interface. The communication interface is used by the apparatus to communicate with another device. For example, the communication interface may be a transceiver, a circuit, a bus, a module, a pin, or another type of communication interface. In a possible device, the apparatus includes:

a memory, configured to store program instructions; and
a processor, configured to determine indication information, where the indication information indicates information about a first neural network model, the first neural network model includes a dedicated layer network and a common layer network, the dedicated layer network is dedicated to the first neural network model, and the common layer network is a common network of the first neural network model and a second neural network model; and configured to send the indication information to a second device through a communication interface.

According to an eleventh aspect, an embodiment of this application provides an apparatus, including a processor, configured to implement the method described in the third aspect. The apparatus may further include a memory, configured to store instructions and data. The memory is coupled to the processor, and when executing the instructions stored in the memory, the processor can implement the method described in the third aspect. The apparatus may further include a communication interface. The communication interface is used by the apparatus to communicate with another device. For example, the communication interface may be a transceiver, a circuit, a bus, a module, a pin, or another type of communication interface. In a possible device, the apparatus includes:

a memory, configured to store program instructions; and
a processor, configured to obtain first indication information from a first device through a communication interface, where the first indication information indicates common information of a first neural network model, the first neural network model includes a dedicated layer network and a common layer network, and the common information of the first neural network model includes information about the common layer network; and obtain second indication information from the first device, where the second indication information indicates information about the dedicated layer network.

According to a twelfth aspect, an embodiment of this application provides an apparatus, including a processor, configured to implement the method described in the fourth aspect. The apparatus may further include a memory, configured to store instructions and data. The memory is coupled to the processor, and when executing the instructions stored in the memory, the processor can implement the method described in the fourth aspect. The apparatus may further include a communication interface. The communication interface is used by the apparatus to communicate with another device. For example, the communication interface may be a transceiver, a circuit, a bus, a module, a pin, or another type of communication interface. In a possible device, the apparatus includes:

a memory, configured to store program instructions; and
a processor, configured to send first indication information to a second device through a communication interface, where the first indication information indicates common information of a first neural network model, the first neural network model includes a dedicated layer network and a common layer network, and the common information of the first neural network model includes information about the common layer network; and send second indication information to the second device, where the second indication information indicates information about the dedicated layer network.

According to a thirteenth aspect, an embodiment of this application further provides a computer-readable storage medium, including instructions. When the instructions are run on a computer, the computer is enabled to perform the method according to any one of the first aspect to the fourth aspect.

According to a fourteenth aspect, an embodiment of this application further provides a computer program product, including instructions. When the instructions are run on a computer, the computer is enabled to perform the method according to any one of the first aspect to the fourth aspect.

According to a fifteenth aspect, an embodiment of this application provides a chip system. The chip system includes a processor, and may further include a memory, and is configured to implement the method according to any one of the first aspect to the fourth aspect. The chip system may include a chip, or may include a chip and another discrete component.

According to a sixteenth aspect, an embodiment of this application provides a system, including the apparatus in the fifth aspect or the apparatus in the ninth aspect, and the apparatus in the sixth aspect or the apparatus in the tenth aspect.

According to a seventeenth aspect, an embodiment of this application provides a system, including the apparatus in the seventh aspect or the apparatus in the eleventh aspect, and the apparatus in the eighth aspect or the apparatus in the twelfth aspect.

## BRIEF DESCRIPTION OF DRAWINGS

FIG. 1 is a schematic diagram of a structure of a neuron according to an embodiment of this application;
FIG. 2 is a schematic diagram of a layer relationship in a neural network according to an embodiment of this application;
FIG. 3 is a schematic diagram of a CNN according to an embodiment of this application;
FIG. 4 is a schematic diagram of an RNN according to an embodiment of this application;
FIG. 5 is a schematic diagram of an architecture of a network according to an embodiment of this application;
FIG. 6 is a schematic diagram of an architecture of a neural network of constellation modulation/demodulation optimized through joint sending and receiving according to an embodiment of this application;
FIG. 7 is a diagram of an example of a cascaded form of a neural network according to an embodiment of this application;
FIG. 8(a) is a schematic diagram of a communication method according to an embodiment of this application;
FIG. 8(b) is a schematic diagram of a communication method according to an embodiment of this application;
FIG. 9 is a schematic diagram of a communication method according to an embodiment of this application;
FIG. 10 is a schematic diagram of a communication method according to an embodiment of this application;
FIG. 11 is a schematic diagram of a communication method according to an embodiment of this application;
FIG. 12 is a schematic diagram of a communication method according to an embodiment of this application;
FIG. 13 is a schematic diagram of a communication method according to an embodiment of this application;
FIG. 14 is a schematic diagram of a communication method according to an embodiment of this application;
FIG. 15(a) is a schematic diagram of a structure of a constellation neural network modulation module according to an embodiment of this application;
FIG. 15(b) is a schematic diagram of a constellation generation network modeled by using a neural network according to an embodiment of this application;
FIG. 15(c) is a schematic diagram of a structure of a constellation neural network demodulation module according to an embodiment of this application;
FIG. 16 is a schematic diagram of a communication apparatus according to an embodiment of this application; and
FIG. 17 is a schematic diagram of a communication apparatus according to an embodiment of this application.

## DESCRIPTION OF EMBODIMENTS

Machine learning (machine learning, ML) has attracted wide attention in academia and industry in recent years. Due to the great advantages of machine learning in addressing structured information and massive data, many researchers in the communications field also focus on machine learning. Machine learning-based communication technologies have great potential in signal classification, channel estimation, performance optimization, and the like. Most existing communication systems are designed block by block, which means that these communication systems are formed by a plurality of modules. For the communication architecture based on a module design, scholars in the communications field have developed many technologies to optimize performance of each module. However, the optimal performance of each module does not mean the optimal performance of the entire communication system. Some new researches show that end-to-end optimization (that is, optimization of the entire communication system) is better than optimization of a single model. Machine learning provides an advanced and powerful tool for maximizing end-to-end performance. In a wireless communication system, in a complex and large-scale communication scenario, a channel status changes rapidly. A plurality of conventional communication models, for example, a multiple input multiple output (multiple input multiple output, MIMO) model, heavily rely on channel state information, performance of the communication models deteriorates in nonlinear time-varying channels, and accurate acquisition of channel state information (channel state information, CSI) of the time-varying channels is very important for system performance. By using a machine learning technology, a communication system may learn a sudden change channel model and feed back a channel state in time.

Based on the foregoing considerations, the use of the machine learning technology in wireless communication can adapt to a new requirement in a future wireless communication scenario.

Machine learning is an important technical way to implement artificial intelligence. Machine learning may include supervised learning, unsupervised learning, and reinforcement learning.

In terms of supervised learning, based on collected sample values and sample labels, a mapping relationship between the sample values and the sample labels is learned by using a machine learning algorithm, and the learned mapping relationship is expressed by using a machine learning model. A process of training a machine learning model is a process of learning the mapping relationship. For example, during signal detection, a received signal including noise is a sample, and a real constellation point corresponding to the signal is a label. Machine learning expects to learn a mapping relationship between the sample and the label through training, that is, enable a machine learning model to have a capability of a signal detector through learning. During training, a model parameter is optimized by calculating an error between a predicted value of a model and an actual label. Once the mapping relationship is learned, a sample label of each new sample can be predicted by using the learned mapping relationship. The mapping relationship learned through supervised learning may include linear mapping and non-linear mapping. A learning task may be classified into a classification task and a regression task based on a type of a label.

In terms of unsupervised learning, an internal pattern of a sample is explored autonomously by using an algorithm based on only a collected sample value. In unsupervised learning, a sample is used as a supervised signal in a type of algorithm, that is, a model learns a mapping relationship between a sample and a sample, which is also referred to as self-supervised learning. During training, a model parameter is optimized by calculating an error between a predicted value of a model and a sample. Self-supervised learning may be used for signal compression and decompression restoration. Common algorithms include an autoencoder, an adversarial generation network, and the like.

Reinforcement learning is different from supervised learning, and is an algorithm that learns a policy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. The goal of reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

A deep neural network (deep neural network, DNN) is a specific implementation form of machine learning. According to a universal approximation theorem, the DNN can theoretically approximate to any continuous function, so that the DNN can learn any mapping. A conventional communication system needs to design a communication module with rich expert knowledge. However, a DNN-based deep learning communication system can automatically discover an implicit pattern structure from a large quantity of data sets, establish a mapping relationship between data, and obtain performance better than that of a conventional modeling method.

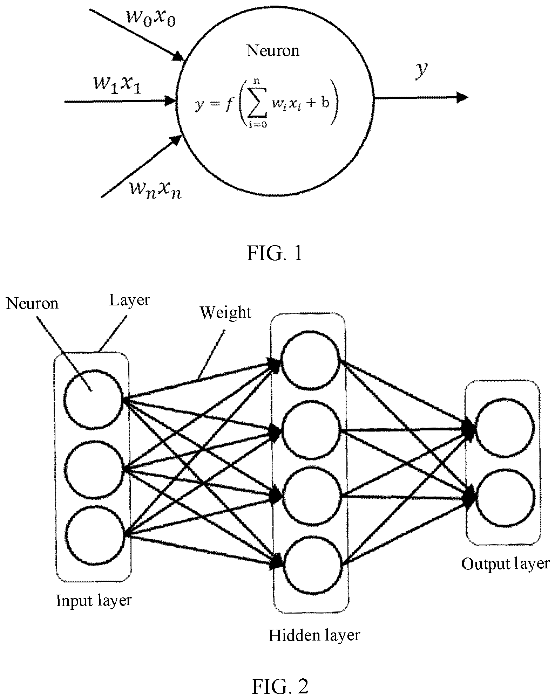

The idea of the DNN comes from a neuron structure of a brain tissue. Each neuron performs a weighted summation operation on an input value of the neuron, and outputs a result of the weighted summation through an activation function. FIG. 1 is a schematic diagram of a structure of a neuron. It is assumed that an input of a neuron is $x = [x_0, x_1, \ldots x_n]$, a weight corresponding to the input is $w = [w_0, w_1, \ldots w_n]$, an offset of weighted summation is b, forms of an activation function may be diversified, for example, the activation function is $y = f(x) = \max\{0, x\}$, and an output

$$y = f\left(\sum_{i=0}^{n} w_i x_i + b\right) = \max\left\{0, \sum_{i=0}^{n} w_i x_i + b\right\}$$

of execution of a neuron is                                                                                                        . $w_i x_i$ represents a product of $w_i$ and $x_i$. The DNN generally has a multi-layer structure. Each layer of the DNN may include a plurality of neurons. An input layer processes a received value by using a neuron, and then transfers the processed value to an intermediate hidden layer. Similarly, the hidden layer transfers a calculation result to a final output layer, to generate a final output of the DNN. FIG. 2 is a schematic diagram of a layer relationship in a neural network.

The DNN generally includes one or more hidden layers, and the hidden layer usually directly affects capabilities of extracting information and fitting a function. Increasing a quantity of hidden layers of the DNN or increasing a quantity of neurons at each layer can improve a function fitting capability of the DNN. A parameter of each neuron includes a weight, an offset, and an activation function. A set including parameters of all neurons in the DNN is referred to as a DNN parameter (or referred to as a neural network parameter). The weight and the offset of the neuron may be optimized in a training process, so that the DNN has capabilities of extracting a data feature and expressing a mapping relationship.

The DNN generally optimizes the neural network parameter through a supervised learning or non-supervised learning policy.

Based on a network construction manner, the DNN may include a feedforward neural network (feedforward neural network, FNN), a convolutional neural network (convolutional neural network, CNN), and a recurrent neural network (recurrent neural network, RNN). FIG. 2 shows an FNN, and the FNN is characterized in that neurons at adjacent layers are completely connected. Consequently, the FNN usually requires a large amount of storage space, resulting in high computational complexity.

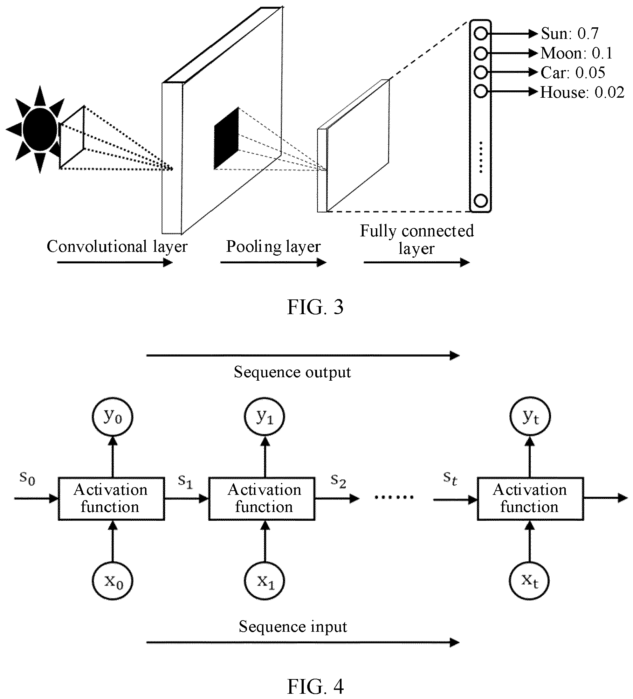

FIG. 3 is a schematic diagram of a CNN. The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size rather than performing an operation by using all input information at one time, which greatly reduces the calculation amount of the neural network parameter. In addition, based on different types of information captured by the window (for example, a person and an object in a same image are information of different types), each window may use different convolution kernel operations, so that the CNN can better extract a feature of input data. A convolution layer is used to perform feature extraction to obtain a feature map. A pooling layer is used to compress the input feature map to reduce the feature map, to simplify network calculation complexity. A fully connected layer is used to map learned "distributed feature representations" to a sample label space.

FIG. 4 is a schematic diagram of an RNN. The RNN is a type of DNN that uses feedback time series information, and an input of the RNN includes a new input value at a current moment and an output value of the RNN at a previous moment. The RNN is suitable for obtaining a sequence feature having a time correlation, and is especially suitable for applications such as speech recognition and channel encoding and decoding. Refer to FIG. 4. Inputs of one neuron at a plurality of moments generate a plurality of outputs. For example, at the $0^{th}$ moment, inputs are $x_0$ and $s_0$, and outputs are $y_0$ and $s_1$; at the first moment, inputs are $x_1$ and $s_1$, and outputs are $y_1$ and $s_2$, ...; and at the $t^{th}$ moment, inputs are $x_t$ and $s_t$, and outputs are $y_t$ and $s_{t+1}$.

The foregoing FNN, CNN, and RNN are common neural network structures, and these network structures are constructed based on neurons.

Thanks to the advantages of machine learning in modeling and information feature extraction, machine learning-based communication solutions may be designed, and good performance can be achieved. The solutions include CSI compression feedback, adaptive constellation point design, robust precoding, and the like. In these solutions, a sending or receiving module in an original communication system is replaced with a neural network model, to optimize transmission performance or reduce processing complexity. To support different application scenarios, different neural network model information may be predefined or configured, so that the neural network model can adapt to requirements of different scenarios. The neural network model usually has a large quantity of neural network parameters. For example, a layer in a fully connected neural network has 100 inputs and 100 outputs, and correspondingly, there are 10100 neural network parameters. Therefore, signaling overheads in a process of storing and forwarding the neural network parameters need to be reduced as much as possible.

In a possible implementation, for each different wireless system parameter (including one or more of a radio channel type, a bandwidth, a quantity of receive antennas, a quantity of transmit antennas, a modulation order, a quantity of paired users, a channel encoding method, and a code rate), a set of neural network model information (including neural network structure information and a neural network parameter) corresponding to the wireless system parameter is defined. An artificial intelligence (artificial intelligence, AI)-based adaptive modulation constellation design is used as an example, when there is one transmit antenna and two receive antennas, a set of neural network model information is required to generate a corresponding modulation constellation; and when there is one transmit antenna and four receive antennas, another set of neural network model information is required to generate a corresponding modulation constellation. Similarly, different radio channel types, bandwidths, modulation orders, quantities of paired users, channel encoding methods, and/or code rates may correspond to different neural network model information.

If a set of corresponding neural network model information is configured for each different wireless system parameter, best performance can be obtained, but there is also a disadvantage that overheads of storage resources and indication resources are increased. For example, a set of neural networks respectively has three, four, and two different configurations for a receive antenna, a modulation order, and a code rate. Therefore, 3*4*2, that is, 24 in total, neural networks need to be pre-stored or transmitted through an air interface, and a large amount of storage space or air interface signaling overheads need to be consumed.

Based on the foregoing, when a neural network is used in a communication system, because different wireless system parameters cause different input and output dimensions, different structures, and different weights of the neural network, a network device or a terminal device needs to consume a large amount of storage space to store neural network model information (including neural network structure information and a neural network parameter), or needs to notify a terminal device of neural network model information by using a large amount of air interface signaling overheads. Therefore, how to reduce storage overheads of the neural network model information or signaling overheads in a sending process needs to be urgently resolved.

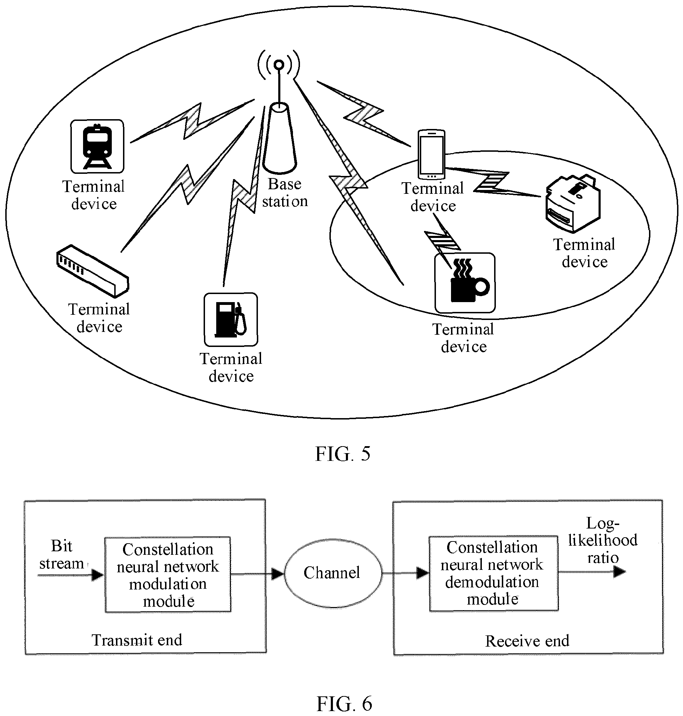

FIG. 5 is a schematic diagram of an architecture of a network applicable to an embodiment of this application. The communication system in embodiments of this application may be a system including a network device and a terminal device, or may be a system including two or more terminal devices. In the communication system including the network device and the terminal device, the network device can send configuration information to the terminal device, the terminal device performs corresponding configuration based on the configuration information, the network device can send downlink data to the terminal device, and the terminal device can send uplink data to the network device. In the communication system (for example, the Internet of Vehicles) including the two or more terminal devices, a terminal device 1 can send configuration information to a terminal device 2, the terminal device 2 performs corresponding configuration based on the configuration information, the terminal device 1 can send data to the terminal device 2, and the terminal device 2 can also send data to the terminal device 1.

The terminal device in embodiments of this application may also be referred to as a terminal, and may be a device having a wireless transceiver function. The terminal device may be deployed on land, including an indoor or outdoor device, a handheld device, or an in-vehicle device; or may be deployed on water (for example, on a ship); or may be deployed in the air (for example, on an airplane, a balloon, or a satellite). The terminal device may be user equipment (user equipment, UE). The UE includes a handheld device, an in-vehicle device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in remote medical, a wireless terminal in a smart grid, a wireless terminal in a smart city (smart city), a wireless terminal in a smart home (smart home), or the like. In embodiments of this application, an apparatus configured to implement a function of the terminal may be a terminal, or may be an apparatus that can support the terminal in implementing a function, for example, a chip system. The apparatus may be installed in the terminal or used together with the terminal. In embodiments of this application, the chip system may include a chip, or may include a chip and another discrete component.

The network device in embodiments of this application includes an access network device, for example, a base station (base station, BS). The base station may be a device that is deployed in a radio access network and that can perform wireless communication with the terminal. The base station may be in a plurality of forms, for example, a macro base station, a micro base station, a relay station, and an access point. For example, the base station in embodiments of this application may be a base station in 5G or an evolved node B (evolved node B, eNB) in long term evolution (long term evolution, LTE). The base station in 5G may also be referred to as a transmission reception point (transmission reception point, TRP) or a 5G base station (next-generation node B, gNB). In embodiments of this application, an apparatus configured to implement a function of the network device may be a network device, or may be an apparatus, for example, a chip system, that can support the network device in implementing a function. The apparatus may be installed in the network device, or may be used together with the network device.

The technical solutions provided in embodiments of this application may be applied to various communication systems, for example, an LTE system, a 5G system, a wireless fidelity (wireless-fidelity, Wi-Fi) system, a future sixth generation mobile communication system, or a system integrating a plurality of communication systems. This is not limited in embodiments of this application. 5G may also be referred to as new radio (new radio, NR).

The technical solutions provided in embodiments of this application may be applied to various communication scenarios, for example, may be applied to one or more of the following communication scenarios: eMBB communication, URLLC, machine type communication (machine type communication, MTC), mMTC, device-to-device (device-to-device, D2D) communication, vehicle to everything (vehicle to everything, V2X) communication, vehicle to vehicle (vehicle to vehicle, V2V) communication, and Internet of Things (internet of things, IoT). In embodiments of this application, the term "communication" may also be described as "transmission", "information transmission", "data transmission", "signal transmission", or the like. The transmission may include sending and/or receiving. In embodiments of this application, communication between a network device and a terminal device is used as an example to describe the technical solutions. A person skilled in the art may also perform communication between another scheduling entity and a slave entity through the technical solutions, for example, communication between a macro base station and a micro base station, and/or communication between a first terminal device and a second terminal device.

To resolve a problem of the storage overheads of the neural network model information or the signaling overheads in the sending process, a solution idea provided in embodiments of this application is as follows: For different wireless system parameters, a neural network of a multi-layer cascaded structure including a common layer and a dedicated layer is used, where neural network model information of common layers corresponding to a plurality of different wireless system parameters is the same, and neural network model information of dedicated layers corresponding to the plurality of different wireless system parameters is different. In addition, the neural network model information of the common layer may be predefined in a protocol or pre-configured by the network device for the terminal device. When a wireless system parameter changes, the network device notifies the terminal device to update neural network model information of a dedicated layer.

In embodiments of this application, in a neural network-based communication system, some communication modules of the network device and/or the terminal device may use a neural network model. FIG. 6 is a schematic diagram of an architecture of a neural network of constellation modulation/demodulation optimized through joint sending and receiving. Both a constellation modulation module at a transmit end and a constellation demodulation module at a receive end use a neural network model. The constellation neural network modulation module at the transmit end maps a bit stream to a constellation symbol, and the constellation neural network demodulation module demaps the received constellation symbol to a log-likelihood ratio of bit information. By collecting channel data to train a neural network, optimal end-to-end communication performance can be achieved. In a communication system, a transmit end can modulate a to-be-sent bit stream to obtain a modulation symbol, and send the modulation symbol to a receive end. When sending the modulation symbol, the transmit end can process the modulation symbol, and send a signal obtained after the processing to the receive end. For example, one or more of the following operations are performed: layer mapping, precoding, orthogonal frequency division multiplexing (orthogonal frequency division multiplexing, OFDM) modulation, beamforming, up-conversion, and the like. For ease of description, other further operations on the modulation symbol are not listed in FIG. 6.

It should be noted that the communication method provided in embodiments of this application is not limited to being applied to a specific scenario, for example, CSI compression feedback, adaptive constellation point design, and robust precoding, but may be applied to any neural network scenario.

In embodiments of this application, the neural network model of the receive end or the transmit end has a multi-layer cascaded network structure, and the network structure includes a common layer and a dedicated layer. The neural network models of the receive end and the transmit end each have a set of common layer model information (or referred to as information about a common layer network). The common layer model information specifically includes common layer network structure information and a common layer network parameter. For a plurality of different wireless system parameters, the common layer model information of the receive end and the common layer model information of the transmit end remain unchanged. For each of the plurality of different wireless system parameters, the neural networks of the receive end and the transmit end each have dedicated layer model information specific to the wireless system parameter. The dedicated layer model information specifically includes dedicated layer network structure information and a dedicated layer network parameter. In embodiments of this application, a common layer may be used as an example for description. However, when the method in embodiments of this application is applied to the communication system, there may be one or more common layers in the communication system. For a solution related to each common layer, the method described in embodiments of this application may be separately used.

In an implementation method, a plurality of different wireless system parameters may be divided into one or more groups, and each group includes one or more wireless system parameters. For a group of wireless system parameters, the group of wireless system parameters corresponds to a same common layer, and each wireless system parameter in the group of wireless system parameters corresponds to a specific dedicated layer. Common layers of different groups of wireless system parameters are designed independently, and common layers of different groups of wireless system parameters may be the same or may be different, which are not limited. Different groups of wireless system parameters may be for different receive ends. For example, each receive end corresponds to a group of wireless parameters, or different groups of wireless system parameters are for different wireless system parameters of a same receive end. This is not limited.

The transmit end and the receive end may each have a plurality of sets of dedicated layer model information (or referred to as information about a dedicated layer network). The dedicated layer model information specifically includes dedicated layer network structure information and a dedicated layer network parameter. For different wireless system parameters, the transmit end and the receive end can switch to use one or more of the plurality of sets of dedicated layer model information. The common layer network structure may include one or more layers of neural networks. The common layer network structure may include one or more of an FNN, a CNN, an RNN, and another type of neural network structure. The dedicated layer network structure may include one or more layers of neural networks. The dedicated layer network structure may include one or more of an FNN, a CNN, an RNN, and another type of neural network structure. The common layer and the dedicated layer may be cascaded in a plurality of different forms.

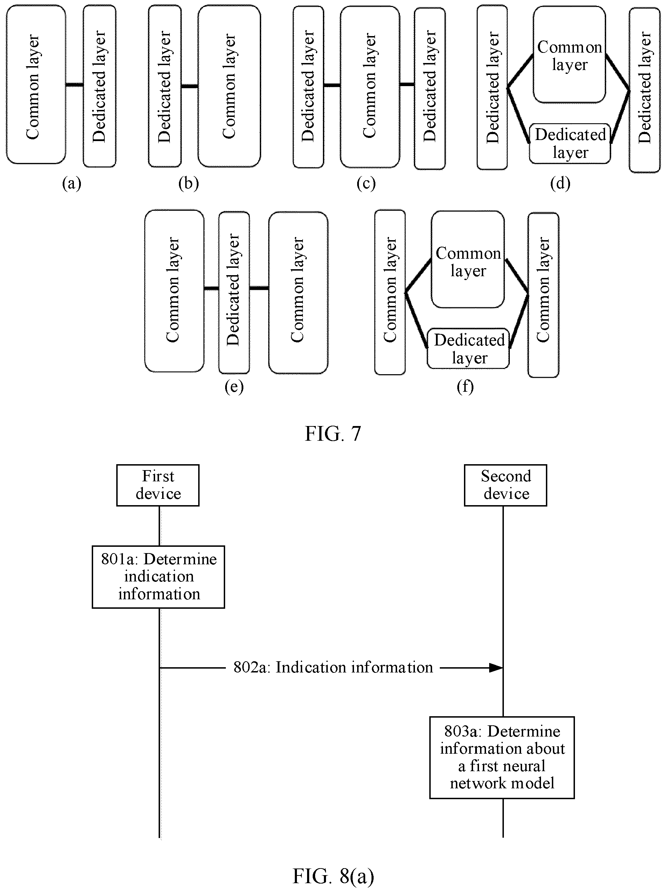

As described above, the neural network model provided in embodiments of this application includes a common layer and a dedicated layer. A parameter of the neural network model includes common layer model information, dedicated layer model information, and neural network cascaded structure information. FIG. 7 is a diagram of an example of a cascaded form of a neural network according to an embodiment of this application. As shown in (a) in FIG. 7, the common layer may be before the dedicated layer, that is, an output of the common layer is used as an input of the dedicated layer. As shown in (b) in FIG. 7, the common layer may alternatively be after the dedicated layer, that is, an input of the common layer is an output of the dedicated layer. As shown in (c) in FIG. 7, the common layer may alternatively be between different dedicated layers, that is, an output of a part of the dedicated layer is used as an input of the common layer, and an output of the common layer is used as an input of the other part of the dedicated layer. As shown in (d) in FIG. 7, the common layer and the dedicated layer may alternatively be connected in parallel between the dedicated layers, that is, an output of a first part of the dedicated layer is used as an input of the common layer and a second part of the dedicated layer, and outputs of the common layer and the second part of the dedicated layer are used as inputs of a third part of the dedicated layer. As shown in (e) in FIG. 7, the dedicated layer may alternatively be between different common layers, that is, an output of a part of the common layer is used as an input of the dedicated layer, and an output of the dedicated layer is used as an input of the other part of the common layer. As shown in (f) in FIG. 7, the dedicated layer and the common layer may alternatively be connected in parallel between the common layers, that is, an output of a first part of the common layer is used as an input of the dedicated layer and a second part of the common layer, and outputs of the dedicated layer and a second part of the common layer are used as inputs of a third part of the common layer.

For example, in embodiments of this application, meanings of the following terms are as follows.

(1) Neural network cascaded structure information.

The neural network cascaded structure information is information about a connection structure between a dedicated layer and a common layer included in a neural network. Specifically, the neural network cascaded structure information includes an interconnection relationship between a neuron in the dedicated layer and a neuron in the common layer. A neural network cascaded structure indicated by the neural network cascaded structure information may be any one of the six different cascaded structures shown in FIG. 7.

(2) Neural network cascaded structure information candidate set.

The neural network cascaded structure information candidate set includes a plurality of pieces of neural network cascaded structure information, and one piece of neural network cascaded structure information indicates one neural network cascaded structure.

In embodiments of this application, for a feature A, for example, neural network cascaded structure information, dedicated layer network structure information, a dedicated layer network parameter, common layer network structure information, and/or a common layer network parameter, when one or more features A are described, the one or more features A may be referred to as at least one feature A, a feature A set, or the like. The one or more features A may be represented in various forms such as a set, a list, a subset, or an element in a set. This is not limited. When a to-be-used feature A is configured from the one or more features A, the one or more features A may also be referred to as one or more candidate features A, at least one candidate feature A, a feature A candidate set, a candidate feature A set, or the like. This is not limited.

(3) Dedicated layer network structure information.

The dedicated layer network structure information includes a quantity of dedicated layers and an interlayer structure inside the dedicated layers (that is, a connection manner between neurons inside the dedicated layers).

(4) Dedicated layer network structure information candidate set.

The dedicated layer network structure information candidate set includes a plurality of pieces of dedicated layer network structure information.

(5) Dedicated layer network parameter.

The dedicated layer network parameter includes a weight, an offset, an activation function, and the like of each neuron in each layer in the dedicated layers.

(6) Dedicated layer network parameter candidate set.

The dedicated layer network parameter candidate set includes a plurality of dedicated layer network parameters.

(7) Common layer network structure information.

The common layer network structure information includes a quantity of common layers and an interlayer structure inside the common layers (that is, a connection manner between neurons inside the common layers).

(8) Common layer network structure information candidate set.

The common layer network structure information candidate set includes a plurality of pieces of common layer network structure information.

(9) Common layer network parameter.

The common layer network parameter includes a weight, an offset, an activation function, and the like of each neuron in each layer in the common layers.

(10) Common layer network parameter candidate set.

The common layer network parameter candidate set includes a plurality of common layer network parameters.

It should be noted that, in embodiments of this application, the dedicated layer is also referred to as a dedicated layer network, the common layer is referred to as a common layer network, and the neural network model information is referred to as information about the neural network model.

To reduce the storage overheads of the neural network model information or the signaling overheads in the sending process, FIG. 8(a) is a schematic diagram of a communication method according to an embodiment of this application. On a neural network model configuration side, the method may be performed by a first device or a chip used in a first device, and on a neural network model use side, the method may be performed by a second device or a chip used in a second device. In a scenario, the first device is a network device (for example, a base station), and the second device is a terminal device (for example, UE). In another application scenario, the first device is a terminal device (for example, UE), and the second device is another terminal device (for example, UE). In another application scenario, the first device is an artificial intelligence device configured to implement an artificial intelligence technology, and the second device is a network device. In another application scenario, the first device is an artificial intelligence device, and the second device is a terminal device (for example, UE). A description is provided below by using an example in which the first device and the second device perform the communication method.

In the communication method, a plurality of neural network models of the second device may share a same or more common layers, and each of the plurality of neural network models independently uses a dedicated layer. That is, the common layer can be shared, but the dedicated layer can only be exclusive.

The method includes the following steps.

Step 801a: The first device determines indication information.

The indication information indicates information about a first neural network model, the first neural network model includes a dedicated layer network and a common layer network, the dedicated layer network is dedicated to the first neural network model, and the common layer network is a common network of the first neural network model and a second neural network model.

The second neural network model refers to a neural network model other than the first neural network model, or is described as that the second neural network model is different from the first neural network model, and the second neural network model does not specifically refer to a neural network model. For example, both the first neural network model and the second neural network model are neural network models of the second device. For another example, the first neural network model is a neural network model of the second device, and the second neural network model is a neural network model of a third device. The third device is different from the second device. For example, the third device and the second device are different terminals.

Step 802a: The first device sends the indication information to the second device. Correspondingly, the second device obtains the indication information.

For example, the second device receives the indication information; or the second device obtains the indication information by using another received signal, for example, obtains the indication information by performing processing (for example, mathematical calculation, physical layer processing, or extraction) on the another signal. In embodiments of this application, a manner of obtaining other information is similar, and details are not described one by one.

Step 803a: The second device determines the information about the first neural network model based on the indication information.

After determining the information about the first neural network model, the second device can determine the first neural network model based on the information about the first neural network model, or update an existing first neural network model. Specifically, the first neural network model may be obtained for the first time by using the information about the first neural network model, or a currently used or existing first neural network model may be replaced. Alternatively, online training is performed on a currently used or existing first neural network model based on the information about the first neural network model, to obtain a trained and updated first neural network model. Optionally, before the currently used or existing first neural network model is updated, the second device further determines that performance of the first neural network model corresponding to the information about the first neural network model is better than performance of the currently used or existing first neural network model. In other words, after determining that the performance of the first neural network model corresponding to the information about the first neural network model is better than the performance of the currently used first neural network model, the second device updates the currently used or existing first neural network model. In this way, deterioration of the performance of the first neural network model caused by update of the first neural network model can be avoided.

Based on the foregoing solution, a neural network model includes a common layer network and a dedicated layer network, and the common layer network is a common network of different neural network models. Therefore, overall overheads of indicating information about the neural network model can be reduced. In addition, the information about the neural network model that is pre-stored by a user (for example, a terminal device) of the neural network model is correspondingly reduced, so that storage overheads of the information about the neural network model can be reduced.

In a possible implementation method, the information about the first neural network model indicated by the indication information includes at least one of the following: neural network cascaded structure information, common layer network structure information, a common layer network parameter, dedicated layer network structure information, and a dedicated layer network parameter.

When the information about the first neural network model indicated by the indication information includes the neural network cascaded structure information, the indication information or the information about the first neural network model may indicate a neural network cascaded structure, or may indicate a configured neural network cascaded structure from a neural network cascaded structure candidate set. In other words, the neural network cascaded structure information may directly indicate the neural network cascaded structure, or indicate a neural network cascaded structure in the neural network cascaded structure candidate set, so that the neural network cascaded structure is flexibly indicated.

When the information about the first neural network model indicated by the indication information includes the common layer network structure information, the indication information or the information about the first neural network model may indicate a common layer network structure, or may indicate a configured common layer network structure from a common layer network structure candidate set. In other words, the common layer network structure information may directly indicate the common layer network structure, or indicate a common layer network structure in the common layer network structure candidate set, so that the common layer network structure is flexibly indicated.

When the information about the first neural network model indicated by the indication information includes common layer network parameter information, the indication information or the information about the first neural network model may indicate the common layer network parameter, or may indicate a configured common layer network parameter from a common layer network parameter candidate set. In other words, the common layer network parameter information may directly indicate the common layer network parameter, or indicate a common layer network parameter in the common layer network parameter candidate set, so that the common layer network parameter is flexibly indicated.

When the information about the first neural network model indicated by the indication information includes the dedicated layer network structure information, the indication information or the information about the first neural network model may indicate a dedicated layer network structure, or may indicate a configured dedicated layer network structure from a dedicated layer network structure candidate set. In other words, the dedicated layer network structure information may directly indicate the dedicated layer network structure, or indicate a dedicated layer network structure in the dedicated layer network structure candidate set, so that the dedicated layer network structure is flexibly indicated.

When the information about the first neural network model indicated by the indication information includes dedicated layer network parameter information, the indication information or the information about the first neural network model may indicate the dedicated layer network parameter, or may indicate a configured dedicated layer network parameter from a dedicated layer network parameter candidate set. In other words, the dedicated layer network parameter information may directly indicate the dedicated layer network parameter, or indicate a dedicated layer network parameter in the dedicated layer network parameter candidate set, so that the dedicated layer network parameter is flexibly indicated.

The following describes an implementation method of the indication information.

In a first implementation method, the indication information carries an index of the neural network cascaded structure information, an index of the dedicated layer network structure information, and an index of the dedicated layer network parameter. Optionally, the common layer network structure and the common layer network parameter are predefined in a protocol, or are pre-configured by the first device for the second device.

Based on the foregoing implementation method, the index of the neural network cascaded structure information indicates a neural network cascaded structure in a configured neural network cascaded structure candidate set, that is, a neural network cascaded structure determined by the first device is a neural network cascaded structure in the neural network cascaded structure candidate set predefined in a protocol or pre-configured. Then, the first device indicates the determined neural network cascaded structure by using the indication information. The index of the dedicated layer network structure information indicates dedicated layer network structure information in a configured dedicated layer network structure information candidate set, that is, dedicated layer network structure information determined by the first device is dedicated layer network structure information in the dedicated layer network structure information candidate set predefined in the protocol or pre-configured. Then, the first device indicates the determined dedicated layer network structure information by using the indication information. The index of the dedicated layer network parameter indicates a dedicated layer network parameter in a configured dedicated layer network parameter candidate set, that is, a dedicated layer network parameter determined by the first device is a dedicated layer network parameter in the dedicated layer network parameter candidate set predefined in the protocol or pre-configured. Then, the first device indicates the determined dedicated layer network parameter by using the indication information.

In a second implementation method, the indication information carries an index of the neural network cascaded structure information, an index of the dedicated layer network structure information, and the dedicated layer network parameter. Optionally, the common layer network structure and the common layer network parameter are predefined in a protocol, or are pre-configured by the first device for the second device.

Based on the foregoing implementation method, an indication of the index of the neural network cascaded structure information and an indication of the index of the dedicated layer network structure information is the same as those in the foregoing first implementation method. Details are not described again. The dedicated layer network parameter may be obtained by the first device through training, and then the first device indicates the dedicated layer network parameter by using the indication information.

In a third implementation method, the indication information carries an index of the neural network cascaded structure information, the dedicated layer network structure information, and the dedicated layer network parameter. Optionally, the common layer network structure and the common layer network parameter are predefined in a protocol, or are pre-configured by the first device for the second device.

Based on the foregoing implementation method, an indication of the index of the neural network cascaded structure information is the same as that in the foregoing first implementation method. Details are not described again. The dedicated layer network structure information may be obtained by the first device through training, and then the first device indicates the dedicated layer network structure information by using the indication information. The dedicated layer network parameter may be obtained by the first device through training, and then the first device indicates the dedicated layer network parameter by using the indication information.

In an implementation method, before step 801a, the first device further sends configuration information to the second device, where the configuration information indicates one or more of the following content: a neural network cascaded structure information candidate set, a common layer network structure information candidate set, the common layer network parameter candidate set, a dedicated layer network structure information candidate set, and the dedicated layer network parameter candidate set. Based on this solution, the first device sends the configuration information to the second device in advance, where the configuration information is used to configure one or more of the neural network cascaded structure information candidate set, the common layer network structure information candidate set, the common layer network parameter candidate set, the dedicated layer network structure information candidate set, and the dedicated layer network parameter candidate set. Therefore, subsequently, the first device indicates an index corresponding to information in the candidate set by using the indication information, to reduce overheads of indicating the information.

In a possible implementation method, before step 801a, the second device further sends auxiliary information to the first device, where the auxiliary information indicates a wireless system parameter for a communication between the first device and the second device. Therefore, the first device can determine, based on the auxiliary information, that neural network model information of the second device needs to be updated. Based on this solution, the second device sends the auxiliary information to the first device, so that the first device can determine, based on the auxiliary information, a parameter and structure information that correspond to a neural network model, to help improve precision of the neural network model.

In a possible implementation method, before step 801a, the second device further sends capability information of the second device to the first device, where the capability information indicates one or more pieces of the following information of the second device:

(1) whether to support using a neural network to replace or implement a function of a communication module, where the communication module herein includes, but not limited to: an OFDM modulation module, an OFDM demodulation module, a constellation mapping module, a constellation demapping module, a channel coding module, and/or a channel decoding module;
(2) whether to support a neural network structure in which the common layer network and the dedicated layer network are cascaded;
(3) whether to support receiving of the dedicated layer network structure information and/or the dedicated layer network parameter through signaling;
(4) stored dedicated layer network structure information predefined in a protocol or pre-configured;
(5) a stored dedicated layer network parameter predefined in the protocol or pre-configured;
(6) a memory space used to store the neural network cascaded structure information, the common layer network structure information, the common layer network parameter, the dedicated layer network structure information, and/or the dedicated layer network parameter; and
(7) computing power information used to run the neural network.

The computing power information herein refers to computing power information for running the neural network, for example, includes information such as an operation speed of a processor and/or a volume of data that can be processed by the processor.

Based on the foregoing solution, the second device sends the capability information to the first device, so that the first device can determine, based on the capability information, the parameter and the structure information that correspond to the neural network model, and determine a manner of sending the indication information, to help improve the precision of the neural network model and reduce sending overheads of the indication information.

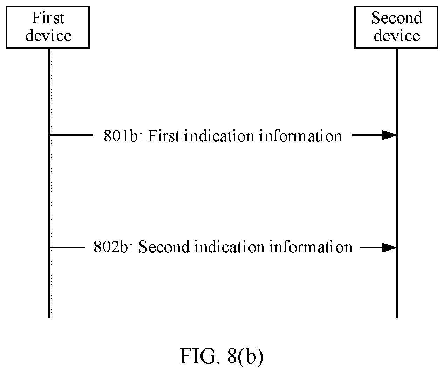

FIG. 8(b) is a schematic diagram of another communication method according to an embodiment of this application. A description of an execution body of the method is similar to the description in FIG. 8(a), and details are not described again. A description is provided below by using an example in which the first device and the second device perform the communication method.

In the communication method, in a possible scenario, neural network models of a plurality of second devices may share a same or more common layers, and each second device independently uses one or more dedicated layers. In other words, the common layer may be shared by a plurality of second devices, but the dedicated layer can be exclusively used by only each second device.

The method includes the following steps.

Step 801b: A first device sends first indication information to a second device, where the first indication information indicates common information of a first neural network model, the first neural network model includes a dedicated layer network and a common layer network, and the common information of the first neural network model includes information about the common layer network.

Step 802b: The first device sends second indication information to the second device, where the second indication information indicates information about the dedicated layer network.

The information about the common layer network includes common layer network structure information and a common layer network parameter, and the first indication information may indicate the common layer network structure information and/or indicate the common layer network parameter. When indicating the common layer network structure information, the first indication information may directly indicate a common layer network structure, or indicate an index of the common layer network structure information from a common layer network structure information candidate set. When indicating the common layer network parameter, the first indication information may directly indicate the common layer network parameter, or indicate an index of the common layer network parameter from a common layer network parameter candidate set.

The information about the dedicated layer network includes dedicated layer network structure information and a dedicated layer network parameter, and the second indication information may indicate the dedicated layer network structure information and/or indicate the dedicated layer network parameter. When indicating the dedicated layer network structure information, the second indication information may directly indicate a dedicated layer network structure, or indicate an index of the dedicated layer network structure information from a dedicated layer network structure information candidate set. When indicating the dedicated layer network parameter, the second indication information may directly indicate the dedicated layer network parameter, or indicate an index of the dedicated layer network parameter from a dedicated layer network parameter candidate set.

After obtaining (for example, receiving) the first indication information and the second indication information, the second device can determine the information about the first neural network model based on the first indication information and the second indication information, and further can obtain the first neural network model based on the information about the first neural network model or can update a currently used or an existing first neural network model. Specific details are similar to corresponding descriptions in FIG. 8(a), and are not described again.

Based on the foregoing solution, a neural network model includes a common layer network and a dedicated layer network. The common layer network is a common network of neural network models of different second devices (for example, terminal devices), and the dedicated layer network is a network independently used by a neural network model of each second device. Therefore, overall overheads of indicating information about the neural network model can be reduced. In addition, information about the neural network model that is pre-stored by the second device is correspondingly reduced, so that storage overheads of the information about the neural network model can be reduced.

In a possible implementation method, the first indication information is carried in an MIB, a system message, or a common message.

In a possible implementation method, the second indication information is carried in RRC signaling, a MAC CE, or DCI dedicated to the second device.

The following specifically describes the communication method with reference to a specific example.

In Embodiment 1 to Embodiment 6, common layer model information predefined in a protocol or pre-configured by the network device for the terminal device specifically includes the common layer network structure information and the common layer network parameter. Therefore, each time neural network model information is updated, the common layer network structure information and the common layer network parameter do not need to be updated. In other words, only the neural network cascaded structure information, the dedicated layer network structure information, and the dedicated layer network parameter need to be updated. Alternatively, an update periodicity of the common layer network structure information and the common layer network parameter is set to be long, and the common layer network structure information and the common layer network parameter are updated when the update periodicity of the common layer network structure information and the common layer network parameter arrives. Alternatively, the common layer network structure information and the common layer network parameter are barely updated within a long time.

In addition, an example in which the first device is the network device and the second device is the terminal device is used for description.

**Embodiment 1**

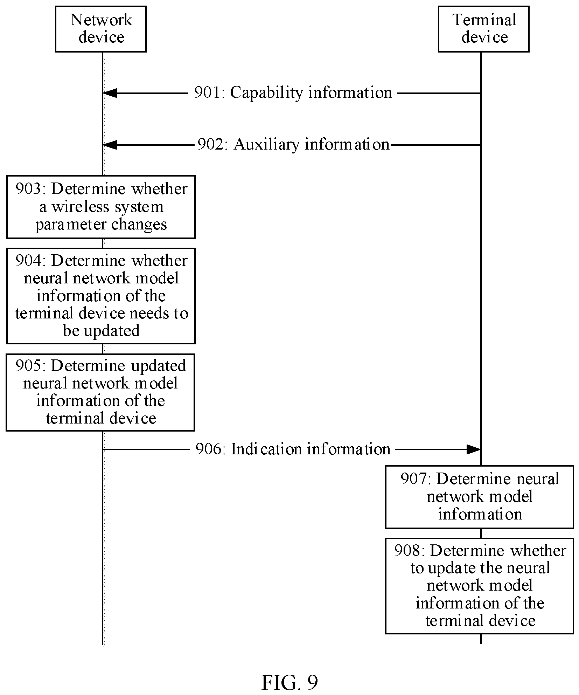

FIG. 9 is a schematic diagram of still another communication method according to an embodiment of this application. In this embodiment, the following information is predefined in a protocol:

(1) a neural network cascaded structure information candidate set;

(2) common layer network structure information;
(3) a common layer network parameter;
(4) a dedicated layer network structure information candidate set; and
(5) a dedicated layer network parameter candidate set.

In a possible implementation, the network device determines neural network model information (which includes neural network cascaded structure information, dedicated layer network structure information, and a dedicated layer network parameter), and then indicates the neural network model information to the terminal device by using indication information. The method may be performed when the network device determines that a wireless system parameter changes, or when the network device configures the neural network model information for the terminal device for the first time, or when the network device updates the neural network model information. This is not limited. The neural network cascaded structure information is selected from the neural network cascaded structure information candidate set predefined in the protocol. The dedicated layer network structure information may be selected from the dedicated layer network structure information candidate set predefined in the protocol, or may be generated by the network device through online training. The dedicated layer network parameter may be selected from the dedicated layer network parameter candidate set predefined in the protocol, or may be generated by the network device through online training. A generation manner and a determining manner of each variable in this embodiment are shown in Table 1.

**Table 1**

| Variable | Neural network cascaded structure information | Common layer network structure information | Common layer network parameter | Dedicated layer network structure information | Dedicated layer network parameter |
|---|---|---|---|---|---|
| Generation manner | Selected from a neural network cascaded structure information candidate set predefined in a protocol | Predefined in the protocol | | Selected from a dedicated layer network structure information candidate set predefined in the protocol, or generated by the network device through online training | Selected from a dedicated layer network parameter candidate set predefined in the protocol, or generated by the network device through online training |
| Variable | Neural network cascaded structure information | Common layer network structure information | Common layer network parameter | Dedicated layer network structure information | Dedicated layer network parameter |
| Determining manner | Indicated by the network device | Predefined in the protocol | | Indicated by the network device or generated by the terminal device through training | Indicated by the network device or generated by the terminal device through training |

As shown in FIG. 9, this embodiment includes the following steps.
Step 901: A terminal device sends capability information to a network device. Correspondingly, the network device receives the capability information.
The terminal device can report capability information of the terminal device to the network device. The capability information includes one or more pieces of the following information: whether the terminal device supports using a neural network to replace or implement functions of some communication modules, whether the terminal device supports a neural network structure in which a common layer network and a dedicated layer network are cascaded, stored dedicated layer network structure information and a stored dedicated layer network parameter predefined in a protocol, whether the terminal device supports receiving of the dedicated layer network structure information and the dedicated layer network parameter through signaling, and computing power information used to run the neural network.
Optionally, the network device notifies the terminal device of related information of the dedicated layer network only when the terminal device supports the neural network structure in which the common layer network and the dedicated layer network are cascaded.

Step 901 is an optional step. When step 901 is not performed, the network device can always notify the terminal device of the related information of the dedicated layer network without referring to the capability information of the terminal device.

Step 902: The terminal device sends auxiliary information to the network device. Correspondingly, the network device obtains (for example, receives) the auxiliary information.

The auxiliary information reported by the terminal device is used to assist the network device in determining whether a wireless system parameter changes.

In a first implementation method, the auxiliary information includes information that directly represents the wireless system parameter, for example, a bandwidth, a quantity of antennas of the terminal device, a modulation order, and/or a code rate. In a second implementation method, the auxiliary information includes information that indirectly represents the wireless system parameter, for example, CSI, a moving speed of the terminal device, a geographic location of the terminal device, a bit error rate, and an estimated signal-to-noise ratio. In a third implementation method, the auxiliary information includes neural network information of the terminal device, for example, indication information indicating dedicated layer network structure information and a dedicated layer network parameter that are currently used or have been stored by the terminal device.

Step 903: The network device determines whether a wireless system parameter changes.

When the network device determines that the wireless system parameter changes, step 904 is performed; otherwise, the process ends.

In a possible implementation, the network device can determine, based on the auxiliary information reported by the terminal device, whether a wireless system parameter changes. A determining method may include: The network device determines a current wireless system parameter based on the auxiliary information reported by the terminal device, then compares the determined current wireless system parameter with a historical wireless system parameter stored in the network device, and determines that the wireless system parameter changes if a variation between the determined current wireless system parameter and the historical wireless system parameter stored in the network device is greater than a threshold. Optionally, the threshold is predefined.

In a possible implementation, the network device can measure a wireless system parameter of an uplink channel and/or determine, based on a configuration parameter of the terminal device that is learned by the network device, whether a wireless system parameter changes. A determining method is similar to the foregoing implementation, and details are not described again.

Step 904: The network device determines whether neural network model information of the terminal device needs to be configured.

The "configuration" herein may be initial configuration or update configuration. For ease of description, this embodiment is described by using configuration as an example.

When the network device determines that the neural network model information of the terminal device needs to be configured, step 905 is performed; otherwise, the process ends.

If the network device determines that the wireless system parameter changes, the network device further determines whether the neural network model information of the terminal device needs to be updated. Not all wireless system parameter changes trigger the update of the neural network model information of the terminal device. For example, for a small channel delay spread variation, the neural network model information of the terminal device does not need to be updated.

In an implementation method, the network device can perform value approximation or classification on a current wireless system parameter to obtain a current standard value corresponding to the current wireless system parameter, then compare the current standard value corresponding to the current wireless system parameter with a historical standard value corresponding to a historical wireless system parameter, determine that the neural network model information of the terminal device does not need to be updated if the current standard value is the same as the historical standard value, and determine that the neural network model information of the terminal device needs to be updated if the current standard value is different from the historical standard value. The historical wireless system parameter is a wireless system parameter corresponding to neural network model information that is previously notified by the network device to the terminal device.

For example, the wireless system parameter includes a radio channel type, and it is predefined that a standard value corresponding to the radio channel type includes 30 nanoseconds (ns), 100 ns, and 300 ns. A channel whose delay spread is less than 50 ns is classified as a 30 ns radio channel type, a channel whose delay spread is greater than or equal to 50 ns and less than 200 ns is classified as a 100 ns radio channel type, and a channel whose delay spread is greater than or equal to 200 ns is classified as a 300 ns radio channel type. For example, because the network device determines that a current channel delay spread is 150 ns, a current standard value corresponding to the current channel delay spread is 100 ns. If the historical standard value corresponding to the historical wireless system parameter is also 100 ns, the network device determines that the neural network model information of the terminal device does not need to be updated.

Step 905: The network device determines updated neural network model information of the terminal device.

If the network device determines that the neural network model information of the terminal device needs to be updated, the network device continues to determine updated neural network model information of the terminal device.

The updated neural network model information of the terminal device includes:

(1) neural network cascaded structure information of the terminal device;
(2) dedicated layer network structure information of the terminal device; and
(3) a dedicated layer network parameter of the terminal device.

Based on the generation manner of the neural network model information shown in Table 1, the network device can determine the neural network model information of the terminal device based on the following method 1 or method 2.

Method 1: The network device respectively selects, from the neural network cascaded structure information candidate set, the dedicated layer network structure information candidate set, and the dedicated layer network parameter candidate set that are predefined in the protocol, neural network cascaded structure information, dedicated layer network structure information, and a dedicated layer network parameter that correspond to a current wireless system parameter of the terminal device.

For example, the network device stores a mapping relationship table between a wireless system parameter and neural network cascaded structure information, dedicated layer network structure information, and a dedicated layer network parameter. The network device can query the table based on the current wireless system parameter of the terminal device, to learn the neural network cascaded structure information, the dedicated layer network structure information, and the dedicated layer network parameter that correspond to the current wireless system parameter of the terminal device.

In this method, both the dedicated layer network structure information and the dedicated layer network parameter may be obtained through offline training.

It should be noted that, in the mapping relationship table, the neural network cascaded structure information, the dedicated layer network structure information, and the dedicated layer network parameter may be respectively represented by using an index of the neural network cascaded structure information, an index of the dedicated layer network structure information, and an index of the dedicated layer network parameter. In other words, the mapping relationship table may store a mapping relationship between the wireless system parameter and the index of the neural network cascaded structure information, the index of the dedicated layer network structure information, and the index of the dedicated layer network parameter.

Method 2: The network device selects, from the neural network cascaded structure information candidate set predefined in the protocol, neural network cascaded structure information corresponding to a current wireless system parameter of the terminal device, and obtains dedicated layer network structure information and a dedicated layer network parameter through online training (for example, through machine learning or neural network training) based on auxiliary information reported by the terminal device.

For example, the network device stores a mapping relationship table between a wireless system parameter and neural network cascaded structure information, and the network device can query the table based on the current wireless system parameter of the terminal device, to learn the neural network cascaded structure information corresponding to the current wireless system parameter of the terminal device.

Further, the network device further determines first indication information indicating the updated neural network model information.

Based on the foregoing method 1, the determined first indication information includes the following information:

(1) an index of the neural network cascaded structure information of the terminal device;
(2) an index of the dedicated layer network structure information of the terminal device; and
(3) an index of the dedicated layer network parameter of the terminal device.

Based on the foregoing method 1, a neural network cascaded structure indicated by the index of the neural network cascaded structure information of the terminal device may be the neural network cascaded structure in FIG. 7, that is, one of the neural network cascaded structure information candidate set predefined in the protocol. Dedicated layer network structure information indicated by the index of the dedicated layer network structure information of the terminal device may be one of the dedicated layer network structure information candidate set predefined in the protocol. A dedicated layer network parameter indicated by the index of the dedicated layer network parameter of the terminal device may be one of the dedicated layer network parameter candidate set predefined in the protocol.

Based on the foregoing method 2, if the dedicated layer network structure information and the dedicated layer network parameter that are obtained through online training have corresponding indexes in the mapping relationship table, the determined indication information may include the following information:

(1) an index of the neural network cascaded structure information of the terminal device;
(2) an index of the dedicated layer network structure information of the terminal device; and
(3) an index of the dedicated layer network parameter of the terminal device.

Based on the foregoing method 2, if the terminal device supports receiving of the dedicated layer network structure information and the dedicated layer network parameter through signaling, the indication information determined by the network device may include the following information:

(1) an index of the neural network cascaded structure information of the terminal device;
(2) the dedicated layer network structure information of the terminal device; and
(3) the dedicated layer network parameter of the terminal device.

It should be noted that, if the terminal device supports receiving of the dedicated layer network structure information and the dedicated layer network parameter through the signaling, the indication information determined by the network device may carry the dedicated layer network structure information and the dedicated layer network parameter that are obtained through offline training, or carry the dedicated layer network structure information and the dedicated layer network parameter that are obtained through online training. In an implementation method, the network device can separately test, based on the auxiliary information reported by the terminal device, the dedicated layer network structure information and the dedicated layer network parameter that are obtained through offline training, and the dedicated layer network structure information and the dedicated layer network parameter that are obtained through online training, to select the dedicated layer network structure information and the dedicated layer network parameter that have a better test result.

Step 906: The network device sends indication information to the terminal device. Correspondingly, the terminal device obtains (for example, receives) the indication information.

The indication information carries the following information:

(1) an index of the neural network cascaded structure information of the terminal device;
(2) an index of the dedicated layer network structure information of the terminal device; and
(3) an index of the dedicated layer network parameter of the terminal device.

Alternatively, the indication information carries the following information:

(1) an index of the neural network cascaded structure information of the terminal device;
(2) the dedicated layer network structure information of the terminal device; and
(3) the dedicated layer network parameter of the terminal device.

Step 907: The terminal device determines neural network model information.

The terminal device determines the neural network model information of the terminal device based on the indication information delivered by the network device, where the neural network model information includes the neural network cascaded structure information, the dedicated layer network structure information, and the dedicated layer network parameter. Further, the terminal device determines a neural network of the terminal device based on the neural network model information.

Optionally, in step 908, the terminal device determines whether to update the neural network model information of the terminal device.

The terminal device compares a new neural network (that is, the neural network determined in step 907) with a neural network currently used by the terminal device, and determines whether to update, based on neural network model information delivered by the network device, neural network model information that is currently used by the terminal device locally.

A method for the terminal device to determine whether the neural network model information of the terminal device needs to be updated may include: The terminal device tests a new neural network and a locally and currently used neural network based on recently obtained auxiliary information, then compares performance of the two neural networks, updates neural network model information of the terminal device if the performance of the former is good, and does not update the neural network model information of the terminal device if the performance of the latter is good. For example, the terminal device separately tests, by using newly obtained CSI, the new neural network and the currently used neural network for performing constellation modulation/demodulation, updates the neural network of the terminal device based on new neural network model information if a demodulation bit error rate of the new neural network is low, otherwise, continues to use the currently and locally used neural network.

It should be noted that, in another implementation method, after step 906, step 907 and step 908 are not performed, but step 907' is performed: The terminal device determines the neural network model information based on the indication information, and performs training based on the neural network model information to obtain new dedicated layer network structure information and a new dedicated layer network parameter. In other words, the terminal device uses the dedicated layer network structure information and the dedicated layer network parameter that are indicated by the network device as reference information, and performs training by using a machine learning method to obtain the new dedicated layer network structure information and the new dedicated layer network parameter. For example, a method for locally training a dedicated layer may include: The terminal device trains a dedicated layer by using a method for training a neural network through machine learning based on locally collected radio channel information and the dedicated layer network structure information and the dedicated layer network parameter that are received from the network device, so that bit error rate performance of the dedicated layer that is cascaded to the common layer and trained locally is close to or better than performance of the dedicated layer that is cascaded to the common layer and used as a reference.

**Embodiment 2**

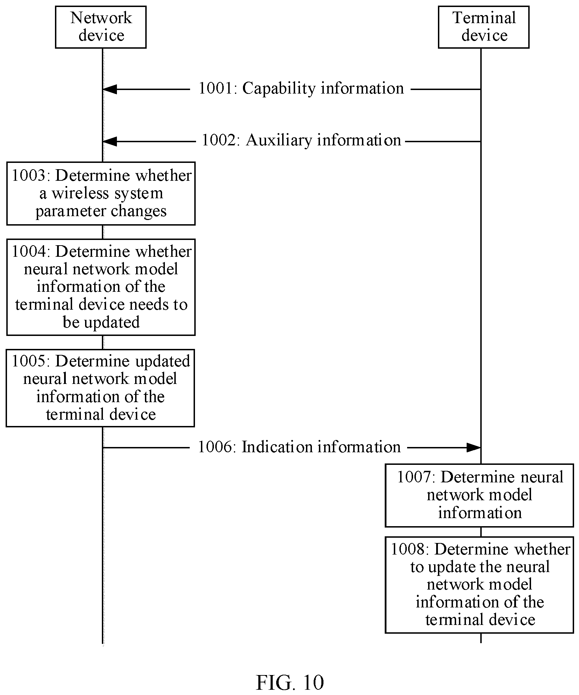

FIG. 10 is a schematic diagram of another neural network parameter indication method according to an embodiment of this application. In this embodiment, the following information is predefined in a protocol:

(1) a neural network cascaded structure information candidate set;
(2) common layer network structure information;
(3) a common layer network parameter; and
(4) a dedicated layer network structure information candidate set.

Compared with Embodiment 1, in this embodiment, a dedicated layer network parameter candidate set is not predefined in the protocol.

Similar to the description in Embodiment 1, a generation manner and a determining manner of each variable in this embodiment are shown in Table 2.

**Table 2**

| Variable | Neural network cascaded structure information | Common layer network structure information | Common layer network parameter | Dedicated layer network structure information | Dedicated layer network parameter |
|---|---|---|---|---|---|
| Generation manner | Selected from a neural network cascaded structure information candidate set predefined in a protocol | Predefined in the protocol | | Selected from a dedicated layer network structure information candidate set predefined in the protocol, or generated by the network device through online training | Generated by the network device through training |
| Determining manner | Indicated by the network device | Predefined in the protocol | | Indicated by the network device or generated by the terminal device through training | Indicated by the network device or generated by the terminal device through training |

As shown in FIG. 10, this embodiment includes the following steps.

Step 1001: A terminal device sends capability information to a network device. Correspondingly, the network device obtains (for example, receives) the capability information.

Before the network device notifies the terminal device of a used neural network, the terminal device can report capability information of the terminal device to the network device. The capability information includes one or more pieces of the following information: whether the terminal device supports using a neural network to replace or implement functions of some communication modules, whether the terminal device supports a neural network structure in which a common layer network and a dedicated layer network are cascaded, stored dedicated layer network structure information predefined in a protocol, whether the terminal device supports receiving of the dedicated layer network structure information and the dedicated layer network parameter through signaling, and computing power information used to run the neural network.

Optionally, the network device notifies the terminal device of related information of the dedicated layer network only when the terminal device supports the neural network structure in which the common layer network and the dedicated layer network are cascaded.

Step 1001 is an optional step. When step 1001 is not performed, the network device can always notify the terminal device of the related information of the dedicated layer without referring to the capability information of the terminal device.

Step 1002 to step 1004 are the same as step 902 to step 904 in the embodiment corresponding to FIG. 9.

Step 1005: The network device determines updated neural network model information of the terminal device.

If the network device determines that the neural network model information of the terminal device needs to be updated, the network device continues to determine updated neural network model information of the terminal device.

The updated neural network model information of the terminal device includes:

(1) neural network cascaded structure information of the terminal device;
(2) dedicated layer network structure information of the terminal device; and
(3) a dedicated layer network parameter of the terminal device.

Based on the generation manner of the neural network model information shown in Table 2, the network device can determine the neural network model information of the terminal device based on the following method 1 or method 2.

Method 1: The network device selects, from the neural network cascaded structure information candidate set and the dedicated layer network structure information candidate set that are predefined in the protocol, neural network cascaded structure information and dedicated layer network structure information that correspond to a current wireless system parameter of the terminal device, and obtains a dedicated layer network parameter through online training (for example, through machine learning or neural network training) based on auxiliary information reported by the terminal device.

For example, the network device stores a mapping relationship table between a wireless system parameter and neural network cascaded structure information and dedicated layer network structure information. The network device can query the table based on the current wireless system parameter of the terminal device, to learn the neural network cascaded structure information and the dedicated layer network structure information that correspond to the current wireless system parameter of the terminal device.

In this method, the dedicated layer network structure information may be obtained through offline training.

It should be noted that, in the mapping relationship table, the neural network cascaded structure information and the dedicated layer network structure information may be respectively represented by using an index of the neural network cascaded structure information and an index of the dedicated layer network structure information. In other words, the mapping relationship table may store a mapping relationship between the wireless system parameter and the index of the neural network cascaded structure information, the index of the dedicated layer network structure information, and the index of the dedicated layer network parameter.

Method 2: The network device selects, from the neural network cascaded structure information candidate set predefined in the protocol, neural network cascaded structure information corresponding to a current wireless system parameter of the terminal device, and obtains dedicated layer network structure information and a dedicated layer network parameter through online training (for example, through machine learning or neural network training) based on auxiliary information reported by the terminal device.

For example, the network device stores a mapping relationship table between a wireless system parameter and neural network cascaded structure information, and the network device can query the table based on the current wireless system parameter of the terminal device, to learn the neural network cascaded structure information corresponding to the current wireless system parameter of the terminal device.

Further, the network device further determines indication information indicating the updated neural network model information.

Based on the foregoing method 1, the determined indication information includes the following information:

(1) an index of the neural network cascaded structure information of the terminal device;
(2) an index of the dedicated layer network structure information of the terminal device; and
(3) the dedicated layer network parameter of the terminal device.

Based on the foregoing method 1, a neural network cascaded structure indicated by the index of the neural network cascaded structure information of the terminal device may be the neural network cascaded structure in FIG. 7, that is, one of the neural network cascaded structure information candidate set predefined in the protocol. Dedicated layer network structure information indicated by the index of the dedicated layer network structure information of the terminal device may be one of the dedicated layer network structure information candidate set predefined in the protocol.

Based on the foregoing method 2, if the dedicated layer network structure information that is obtained through online training has a corresponding index in the mapping relationship table, the determined indication information may include the following information:

(1) an index of the neural network cascaded structure information of the terminal device;
(2) an index of the dedicated layer network structure information of the terminal device; and
(3) the dedicated layer network parameter of the terminal device.

Based on the foregoing method 2, if the dedicated layer network structure information that is obtained through online training has no corresponding index in the mapping relationship table, the indication information determined by the network device may include the following information:

(1) an index of the neural network cascaded structure information of the terminal device;
(2) the dedicated layer network structure information of the terminal device; and
(3) the dedicated layer network parameter of the terminal device.

It should be noted that the indication information determined by the network device may carry the dedicated layer network structure information obtained through offline training and the dedicated layer network parameter obtained through online training, or carry the dedicated layer network structure information and the dedicated layer network parameter that are obtained through online training. In an implementation method, the network device can separately test, based on the auxiliary information reported by the terminal device, the dedicated layer network structure information obtained through offline training and the dedicated layer network parameter obtained through online training, and the dedicated layer network structure information and the dedicated layer network parameter that are obtained through online training, to select the dedicated layer network structure information and the dedicated layer network parameter that have a better test result.

It should be noted that, if the network device can know dedicated layer network structure information and a dedicated layer network parameter that are currently used by the terminal device, the network device can also determine latest dedicated layer network structure information and a latest dedicated layer network parameter of the terminal device and then determine a variation between the latest dedicated layer network parameter of the terminal device and the currently used dedicated layer network parameter, so that the network device can send the variation of the dedicated layer network parameter of the terminal device instead of sending the dedicated layer network parameter of the terminal device to the terminal device.

Step 1006: The network device sends indication information to the terminal device. Correspondingly, the terminal device obtains (for example, receives) the indication information.

The indication information carries the following information:

(1) an index of the neural network cascaded structure information of the terminal device;
(2) an index of the dedicated layer network structure information of the terminal device; and
(3) the dedicated layer network parameter of the terminal device.

Alternatively, the indication information carries the following information:

(1) an index of the neural network cascaded structure information of the terminal device;
(2) the dedicated layer network structure information of the terminal device; and
(3) the dedicated layer network parameter of the terminal device.

Step 1007: The terminal device determines neural network model information.

The terminal device determines the neural network model information of the terminal device based on the indication information delivered by the network device, where the neural network model information includes the neural network cascaded structure information, the dedicated layer network structure information, and the dedicated layer network parameter. Further, the terminal device determines a neural network of the terminal device based on the neural network model information.

Step 1008 is the same as step 908 in the embodiment corresponding to FIG. 9.

It should be noted that, in another implementation method, after step 1006, step 1007 and step 1008 are not performed, but step 907' is performed. For details, refer to the foregoing descriptions.

**Embodiment 3**

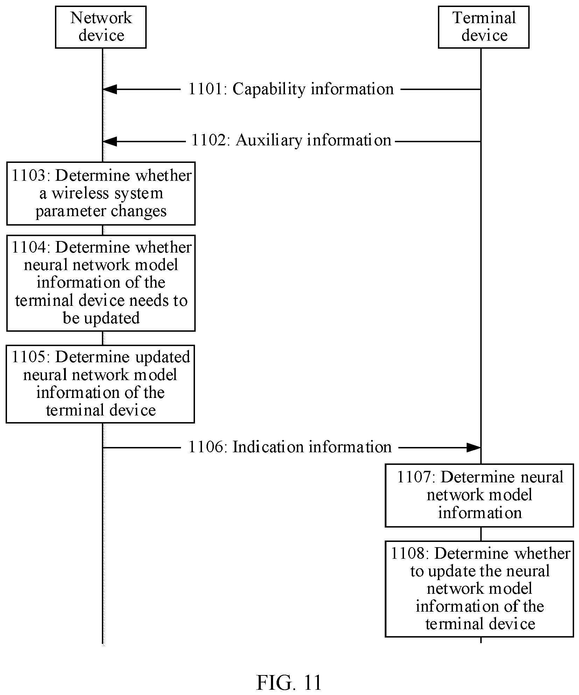

FIG. 11 is a schematic diagram of another neural network parameter indication method according to an embodiment of this application. In this embodiment, the following information is predefined in a protocol:

(1) a neural network cascaded structure information candidate set;
(2) common layer network structure information; and
(3) a common layer network parameter.

Compared with Embodiment 1, in this embodiment, a dedicated layer network structure information candidate set and a dedicated layer network parameter candidate set are not predefined in the protocol.

Similar to Embodiment 1, a generation manner and a determining manner of each variable in this embodiment are shown in Table 3.

**Table 3**

| Variable | Neural network cascaded structure information | Common layer network structure information | Common layer network parameter | Dedicated layer network structure information | Dedicated layer network parameter |
|---|---|---|---|---|---|
| Generation manner | Selected from a neural network cascaded structure information candidate set predefined in a protocol | Predefined in the protocol | | Generated by the network device through online training | Generated by the network device through online training |
| Determining manner | Indicated by the network device | Predefined in the protocol | | Indicated by the network device or generated by the terminal device through training | Indicated by the network device or generated by the terminal device through training |

As shown in FIG. 11, this embodiment includes the following steps.

Step 1101: A terminal device sends capability information to a network device. Correspondingly, the network device obtains (for example, receives) the capability information.

Before the network device notifies the terminal device of a used neural network, the terminal device can report capability information of the terminal device to the network device. The capability information includes one or more pieces of the following information: whether the terminal device supports using a neural network to replace or implement functions of some communication modules, whether the terminal device supports a neural network structure in which a common layer network and a dedicated layer network are cascaded, whether the terminal device supports receiving of the dedicated layer network structure information and the dedicated layer network parameter through signaling, and computing power information used to run the neural network.

Optionally, the network device notifies the terminal device of related information of the dedicated layer network only when the terminal device supports the neural network structure in which the common layer network and the dedicated layer network are cascaded.

Step 1101 is an optional step. When step 1101 is not performed, the network device can always notify the terminal device of the related information of the dedicated layer without referring to the capability information of the terminal device.

Step 1102 to step 1104 are the same as step 902 to step 904 in the embodiment corresponding to FIG. 9.

Step 1105: The network device determines updated neural network model information of the terminal device.

If the network device determines that the neural network model information of the terminal device needs to be updated, the network device continues to determine updated neural network model information of the terminal device.

The updated neural network model information of the terminal device includes:

(1) neural network cascaded structure information of the terminal device;
(2) dedicated layer network structure information of the terminal device; and
(3) a dedicated layer network parameter of the terminal device.

In the neural network model information generation manner shown in Table 3, the network device can determine neural network model information of the terminal device in the following method: The network device selects, from the neural network cascaded structure information candidate set predefined in the protocol, neural network cascaded structure information corresponding to a current wireless system parameter of the terminal device, and obtains dedicated layer network structure information and a dedicated layer network parameter through online training (for example, through machine learning or neural network training) based on auxiliary information reported by the terminal device.

For example, the network device stores a mapping relationship table between a wireless system parameter and neural network cascaded structure information, and the network device can query the table based on the current wireless system parameter of the terminal device, to learn the neural network cascaded structure information corresponding to the current wireless system parameter of the terminal device. It should be noted that, in the mapping relationship table, the neural network cascaded structure information may be represented by using an index of the neural network cascaded structure information. In other words, the mapping relationship table may store a mapping relationship between the wireless system parameter and the index of the neural network cascaded structure information.

Further, the network device further determines indication information indicating the updated neural network model information. The indication information includes:

(1) an index of the neural network cascaded structure information of the terminal device;
(2) the dedicated layer network structure information of the terminal device; and
(3) the dedicated layer network parameter of the terminal device.

Based on the foregoing method, a neural network cascaded structure indicated by the index of the neural network cascaded structure information of the terminal device may be the neural network cascaded structure in FIG. 7, that is, one of the neural network cascaded structure information candidate set predefined in the protocol.

Step 1106: The network device sends indication information to the terminal device. Correspondingly, the terminal device obtains (for example, receives) the indication information.

The indication information carries the following information:

(1) an index of the neural network cascaded structure information of the terminal device;
(2) the dedicated layer network structure information of the terminal device; and
(3) the dedicated layer network parameter of the terminal device.

Step 1107: The terminal device determines neural network model information.

The terminal device determines the neural network model information of the terminal device based on the indication information delivered by the network device, where the neural network model information includes the neural network cascaded structure information, the dedicated layer network structure information, and the dedicated layer network parameter. Further, the terminal device determines a neural network of the terminal device based on the neural network model information.

Step 1108 is the same as step 908 in the embodiment corresponding to FIG. 9.

It should be noted that, in another implementation method, after step 1106, step 1107 and step 1108 are not performed, but step 907' is performed. For details, refer to the foregoing descriptions.

**Embodiment 4**

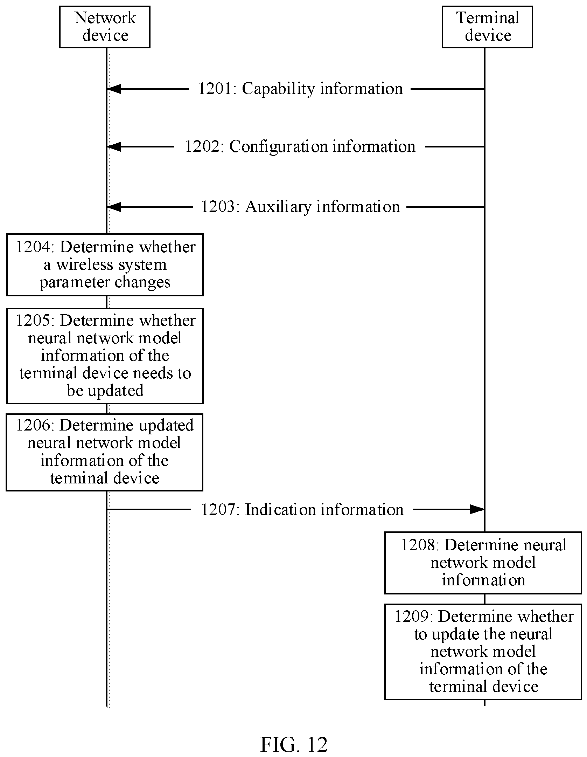

FIG. 12 is a schematic diagram of another neural network parameter indication method according to an embodiment of this application. In this embodiment, the network device pre-configures (for example, the network device pre-configures the following information for the terminal device by using signaling or a system message) the following information for the terminal device:

(1) a neural network cascaded structure information candidate set;
(2) common layer network structure information;
(3) a common layer network parameter;
(4) a dedicated layer network structure information candidate set; and
(5) a dedicated layer network parameter candidate set.

Similar to Embodiment 1, a generation manner and a determining manner of each variable in this embodiment are shown in Table 4.

**Table 4**

| Variable | Neural network cascaded structure information | Common layer network structure information | Common layer network parameter | Dedicated layer network structure information | Dedicated layer network parameter |
|---|---|---|---|---|---|
| Generation manner | Selected from a neural network cascaded structure information candidate set pre-configured by the network device | Pre-configured by the network device | | Selected from a dedicated layer network structure information candidate set pre-configured by the network device, or generated by the network device through online training | Selected from a dedicated layer network parameter candidate set pre-configured by the network device, or generated by the network device through online training |
| Determining manner | Indicated by the network device | Pre-configured by the network device | | Indicated by the network device or generated by the terminal device through training | Indicated by the network device or generated by the terminal device through training |

As shown in FIG. 12, this embodiment includes the following steps.

Step 1201: A terminal device sends capability information to a network device. Correspondingly, the network device obtains (for example, receives) the capability information.

The terminal device can report capability information of the terminal device to the network device. The capability information includes one or more pieces of the following information: whether the terminal device supports using a neural network to replace or implement functions of some communication modules, whether the terminal device supports a neural network structure in which a common layer network and a dedicated layer network are cascaded, whether the terminal device supports receiving of the dedicated layer network structure information and the dedicated layer network parameter through signaling, a memory space for storing the neural network cascaded structure information, the common layer network structure information, the common layer network parameter, the dedicated layer network structure information, and the dedicated layer network parameter, and computing power information used to run the neural network.

Optionally, the network device needs to pre-configure neural network model information for the terminal device only when the terminal device supports the neural network structure in which the common layer network and the dedicated layer network are cascaded.

This step is an optional step. When the step is not performed, the network device can always pre-configure the neural network model information for the terminal device without referring to the capability information of the terminal device.

Step 1202: The network device sends configuration information to the terminal device. Correspondingly, the terminal device obtains (for example, receives) the configuration information.

The network device sends configuration information to the terminal device, where the configuration information carries the neural network model information. The neural network model information includes a neural network cascaded structure information candidate set, common layer network structure information, a common layer network parameter, a dedicated layer network structure information candidate set, and a dedicated layer network parameter candidate set. This step may be performed when the terminal device accesses a wireless network for the first time, or when the network device needs to update these parameters configured in this step, which is not limited.

Optionally, the configuration information further carries index information. The index information includes an index of each neural network cascaded structure information in the neural network cascaded structure information candidate set, an index of each dedicated layer network structure information in the dedicated layer network structure information candidate set, and an index of each dedicated layer network parameter in the dedicated layer network parameter candidate set.

Optionally, the configuration information further carries a first indication, and the first indication indicates default neural network cascaded structure information, default dedicated layer network structure information, and a default dedicated layer network parameter. The meaning of "default" herein is alternative. For example, when using a neural network model for the first time, the terminal device can use the default neural network cascaded structure information, the default dedicated layer network structure information, and the default dedicated layer network parameter. Alternatively, when the network device subsequently updates a neural network model of the terminal device, if an error occurs on the update, the terminal device does not update the neural network cascaded structure information, the dedicated layer network structure information, and the dedicated layer network parameter, or uses the default neural network cascaded structure information, the default dedicated layer network structure information, and the default dedicated layer network parameter.

Step 1203 to step 1205 are the same as step 902 to step 904 in the embodiment corresponding to FIG. 9.

Step 1206: The network device determines updated neural network model information of the terminal device.

If the network device determines that the neural network model information of the terminal device needs to be updated, the network device continues to determine updated neural network model information of the terminal device.

The updated neural network model information of the terminal device includes:

(1) neural network cascaded structure information of the terminal device;
(2) dedicated layer network structure information of the terminal device; and
(3) a dedicated layer network parameter of the terminal device.

Based on the generation manner of the neural network model information shown in Table 4, the network device can determine the neural network model information of the terminal device based on the following method 1 or method 2.

Method 1: The network device respectively selects, from the neural network cascaded structure information candidate set, the dedicated layer network structure information candidate set, and the dedicated layer network parameter candidate set that are pre-configured by the network device, neural network cascaded structure information, dedicated layer network structure information, and a dedicated layer network parameter that correspond to a current wireless system parameter of the terminal device.

For example, the network device stores a mapping relationship table between a wireless system parameter and neural network cascaded structure information, dedicated layer network structure information, and a dedicated layer network parameter. The network device can query the table based on the current wireless system parameter of the terminal device, to learn the neural network cascaded structure information, the dedicated layer network structure information, and the dedicated layer network parameter that correspond to the current wireless system parameter of the terminal device.

In this method, both the dedicated layer network structure information and the dedicated layer network parameter are obtained through offline training.

It should be noted that, in the mapping relationship table, the neural network cascaded structure information, the dedicated layer network structure information, and the dedicated layer network parameter may be respectively represented by using an index of the neural network cascaded structure information, an index of the dedicated layer network structure information, and an index of the dedicated layer network parameter. In other words, the mapping relationship table may store a mapping relationship between the wireless system parameter and the index of the neural network cascaded structure information, the index of the dedicated layer network structure information, and the index of the dedicated layer network parameter.

Method 2: The network device selects, from the neural network cascaded structure information candidate set pre-configured by the network device, neural network cascaded structure information corresponding to a current wireless system parameter of the terminal device, and obtains dedicated layer network structure information and a dedicated layer network parameter through online training (for example, through machine learning or neural network training) based on auxiliary information reported by the terminal device.

For example, the network device stores a mapping relationship table between a wireless system parameter and neural network cascaded structure information, and the network device can query the table based on the current wireless system parameter of the terminal device, to learn the neural network cascaded structure information corresponding to the current wireless system parameter of the terminal device.

Further, the network device further determines indication information indicating the updated neural network model information.

Based on the foregoing method 1, the determined indication information includes the following information:

(1) an index of the neural network cascaded structure information of the terminal device;
(2) an index of the dedicated layer network structure information of the terminal device; and
(3) an index of the dedicated layer network parameter of the terminal device.

Based on the foregoing method 1, a neural network cascaded structure indicated by the index of the neural network cascaded structure information of the terminal device may be the neural network cascaded structure in FIG. 7, that is, one of the neural network cascaded structure information candidate set pre-configured by the network device. Dedicated layer network structure information indicated by the index of the dedicated layer network structure information of the terminal device may be one of the dedicated layer network structure information candidate set pre-configured by the network device. A dedicated layer network parameter indicated by the index of the dedicated layer network parameter of the terminal device may be one of the dedicated layer network parameter candidate set pre-configured by the network device.

Based on the foregoing method 2, if the dedicated layer network structure information and the dedicated layer network parameter that are obtained through online training have corresponding indexes in the mapping relationship table, the determined indication information may include the following information:

(1) an index of the neural network cascaded structure information of the terminal device;
(2) an index of the dedicated layer network structure information of the terminal device; and
(3) an index of the dedicated layer network parameter of the terminal device.

Based on the foregoing method 2, if the terminal device supports receiving of the dedicated layer network structure information and the dedicated layer network parameter through signaling, the indication information determined by the network device may include the following information:

(1) an index of the neural network cascaded structure information of the terminal device;
(2) the dedicated layer network structure information of the terminal device; and
(3) the dedicated layer network parameter of the terminal device.

It should be noted that, if the terminal device supports receiving of the dedicated layer network structure information and the dedicated layer network parameter through the signaling, the indication information determined by the network device may carry the dedicated layer network structure information and the dedicated layer network parameter that are obtained through offline training, or carry the dedicated layer network structure information and the dedicated layer network parameter that are obtained through online training. In an implementation method, the network device can separately test, based on the auxiliary information reported by the terminal device, the dedicated layer network structure information and the dedicated layer network parameter that are obtained through offline training, and the dedicated layer network structure information and the dedicated layer network parameter that are obtained through online training, to select the dedicated layer network structure information and the dedicated layer network parameter that have a better test result.

Step 1207: The network device sends indication information to the terminal device. Correspondingly, the terminal device obtains (for example, receives) the indication information.

The indication information carries the following information:

(1) an index of the neural network cascaded structure information of the terminal device;
(2) an index of the dedicated layer network structure information of the terminal device; and
(3) an index of the dedicated layer network parameter of the terminal device.

Alternatively, the indication information carries the following information:

(1) an index of the neural network cascaded structure information of the terminal device;
(2) the dedicated layer network structure information of the terminal device; and
(3) the dedicated layer network parameter of the terminal device.

Step 1208: The terminal device determines neural network model information.

The terminal device determines the neural network model information of the terminal device based on the indication information delivered by the network device, where the neural network model information includes the neural network cascaded structure information, the dedicated layer network structure information, and the dedicated layer network parameter. Further, the terminal device determines a neural network of the terminal device based on the neural network model information.

Step 1209 is the same as step 908 in the embodiment corresponding to FIG. 9.

It should be noted that, in another implementation method, after step 1207, step 1208 and step 1209 are not performed, but step 907' is performed. For details, refer to the foregoing descriptions.

**Embodiment 5**

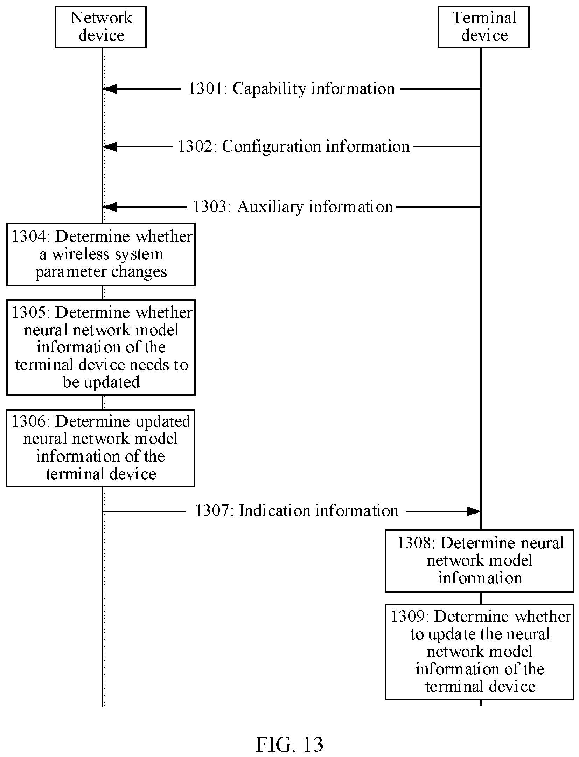

FIG. 13 is a schematic diagram of another neural network parameter indication method according to an embodiment of this application. In this embodiment, the network device pre-configures the following information for the terminal device:

(1) a neural network cascaded structure information candidate set;
(2) common layer network structure information;
(3) a common layer network parameter; and
(4) a dedicated layer network structure information candidate set.

Compared with Embodiment 4, in this embodiment, the network device does not pre-configure a dedicated layer network parameter candidate set.

Similar to Embodiment 1, a generation manner and a determining manner of each variable in this embodiment are shown in Table 5.

**Table 5**

| Variable | Neural network cascaded structure information | Common layer network structure information | Common layer network parameter | Dedicated layer network structure information | Dedicated layer network parameter |
|---|---|---|---|---|---|
| Generation manner | Selected from a neural network cascaded structure information candidate set pre-configured by the network device | Pre-configured by the network device | | Selected from a dedicated layer network structure information candidate set pre-configured by the network device, or generated by the network device through online training | Generated by the network device through training |
| Determining manner | Indicated by the network device | Pre-configured by the network device | | Indicated by the network device or generated by the terminal device through training | Indicated by the network device or generated by the terminal device through training |

As shown in FIG. 13, this embodiment includes the following steps.

Step 1301: A terminal device sends capability information to a network device. Correspondingly, the network device obtains (for example, receives) the capability information.

Before the network device pre-configures neural network model information for the terminal device, the terminal device can report capability information of the terminal device to the network device. The capability information includes one or more pieces of the following information: whether the terminal device supports using a neural network to replace or implement functions of some communication modules, whether the terminal device supports a neural network structure in which a common layer network and a dedicated layer network are cascaded, whether the terminal device supports receiving of the dedicated layer network structure information and the dedicated layer network parameter through signaling, a memory space for storing the common layer network structure information, the common layer network parameter, the dedicated layer network structure information, and the dedicated layer network parameter, and computing power information used to run the neural network.

Optionally, the network device pre-configures the neural network model information for the terminal device only when the terminal device supports the neural network structure in which the common layer network and the dedicated layer network are cascaded.

Step 1301 is an optional step. When step 1301 is not performed, the network device can always pre-configure the neural network model information for the terminal device without referring to the capability information of the terminal device.

Step 1302: The network device sends configuration information to the terminal device. Correspondingly, the terminal device obtains (for example, receives) the configuration information.

When the terminal device accesses a wireless network for the first time, the network device sends configuration information to the terminal device, where the configuration information carries neural network model information. The neural network model information includes a neural network cascaded structure information candidate set, common layer network structure information, a common layer network parameter, and a dedicated layer network structure information candidate set.

Optionally, the configuration information further carries index information. The index information includes an index of each neural network cascaded structure information and an index of each dedicated layer network structure information.

Optionally, the configuration information further carries a second indication, and the second indication indicates default neural network cascaded structure information and default dedicated layer network structure information.

Step 1303 to step 1305 are the same as step 1203 to step 1205 in the embodiment corresponding to FIG. 12.

Step 1306: The network device determines updated neural network model information of the terminal device.

If the network device determines that the neural network model information of the terminal device needs to be updated, the network device continues to determine updated neural network model information of the terminal device.

The updated neural network model information of the terminal device includes:

(1) neural network cascaded structure information of the terminal device;
(2) dedicated layer network structure information of the terminal device; and
(3) a dedicated layer network parameter of the terminal device.

Based on the generation manner of the neural network model information shown in Table 5, the network device can determine the neural network model information of the terminal device based on the following method 1 or method 2.

Method 1: The network device selects, from the neural network cascaded structure information candidate set and the dedicated layer network structure information candidate set that are pre-configured by the network device, neural network cascaded structure information and dedicated layer network structure information that correspond to a current wireless system parameter of the terminal device, and obtains a dedicated layer network parameter through online training (for example, through machine learning or neural network training) based on auxiliary information reported by the terminal device.

For example, the network device stores a mapping relationship table between a wireless system parameter and neural network cascaded structure information and dedicated layer network structure information. The network device can query the table based on the current wireless system parameter of the terminal device, to learn the neural network cascaded structure information and the dedicated layer network structure information that correspond to the current wireless system parameter of the terminal device.

In this method, the dedicated layer network structure information is obtained through offline training.

It should be noted that, in the mapping relationship table, the neural network cascaded structure information and the dedicated layer network structure information may be respectively represented by using an index of the neural network cascaded structure information and an index of the dedicated layer network structure information. In other words, the mapping relationship table may store a mapping relationship between the wireless system parameter and the index of the neural network cascaded structure information, the index of the dedicated layer network structure information, and the index of the dedicated layer network parameter.

Method 2: The network device selects, from the neural network cascaded structure information candidate set pre-configured by the network device, neural network cascaded structure information corresponding to a current wireless system parameter of the terminal device, and obtains dedicated layer network structure information and a dedicated layer network parameter through online training (for example, through machine learning or neural network training) based on auxiliary information reported by the terminal device.

For example, the network device stores a mapping relationship table between a wireless system parameter and neural network cascaded structure information, and the network device can query the table based on the current wireless system parameter of the terminal device, to learn the neural network cascaded structure information corresponding to the current wireless system parameter of the terminal device.

Further, the network device further determines indication information indicating the updated neural network model information.

Based on the foregoing method 1, the determined indication information includes the following information:

(1) an index of the neural network cascaded structure information of the terminal device;
(2) an index of the dedicated layer network structure information of the terminal device; and
(3) the dedicated layer network parameter of the terminal device.

Based on the foregoing method 1, a neural network cascaded structure indicated by the index of the neural network cascaded structure information of the terminal device may be the neural network cascaded structure in FIG. 7, that is, one of the neural network cascaded structure information candidate set pre-configured by the network device. Dedicated layer network structure information indicated by the index of the dedicated layer network structure information of the terminal device may be one of the dedicated layer network structure information candidate set pre-configured by the network device.

Based on the foregoing method 2, if the dedicated layer network structure information that is obtained through online training has a corresponding index in the mapping relationship table, the determined indication information may include the following information:

(1) an index of the neural network cascaded structure information of the terminal device;
(2) an index of the dedicated layer network structure information of the terminal device; and
(3) the dedicated layer network parameter of the terminal device.

Based on the foregoing method 2, if the dedicated layer network structure information that is obtained through online training has no corresponding index in the mapping relationship table, the indication information determined by the network device may include the following information:

(1) an index of the neural network cascaded structure information of the terminal device;
(2) the dedicated layer network structure information of the terminal device; and
(3) the dedicated layer network parameter of the terminal device.

It should be noted that the indication information determined by the network device may carry the dedicated layer network structure information obtained through offline training and the dedicated layer network parameter obtained through online training, or carry the dedicated layer network structure information and the dedicated layer network parameter that are obtained through online training. In an implementation method, the network device can separately test, based on the auxiliary information reported by the terminal device, the dedicated layer network structure information obtained through offline training and the dedicated layer network parameter obtained through online training, and the dedicated layer network structure information and the dedicated layer network parameter that are obtained through online training, to select the dedicated layer network structure information and the dedicated layer network parameter that have a better test result.

It should be noted that, if the network device can know dedicated layer network structure information and a dedicated layer network parameter that are currently used by the terminal device, the network device can also determine latest dedicated layer network structure information and a latest dedicated layer network parameter of the terminal device and then determine a variation between the latest dedicated layer network parameter of the terminal device and the currently used dedicated layer network parameter, so that the network device can send the variation of the dedicated layer network parameter of the terminal device instead of sending the dedicated layer network parameter of the terminal device to the terminal device.

Step 1307: The network device sends indication information to the terminal device. Correspondingly, the terminal device obtains (for example, receives) the indication information.

The indication information carries the following information:

(1) an index of the neural network cascaded structure information of the terminal device;
(2) an index of the dedicated layer network structure information of the terminal device; and
(3) the dedicated layer network parameter of the terminal device.

Alternatively, the indication information carries the following information:

(1) an index of the neural network cascaded structure information of the terminal device;
(2) the dedicated layer network structure information of the terminal device; and
(3) the dedicated layer network parameter of the terminal device.

Step 1308: The terminal device determines neural network model information.

The terminal device determines the neural network model information of the terminal device based on the indication information delivered by the network device, where the neural network model information includes the neural network cascaded structure information, the dedicated layer network structure information, and the dedicated layer network parameter. Further, the terminal device determines a neural network of the terminal device based on the neural network model information.

Step 1309 is the same as step 1209 in the embodiment corresponding to FIG. 12.

It should be noted that, in another implementation method, after step 1307, step 1308 and step 1309 are not performed, but step 907' is performed. For details, refer to the foregoing descriptions.

**Embodiment 6**

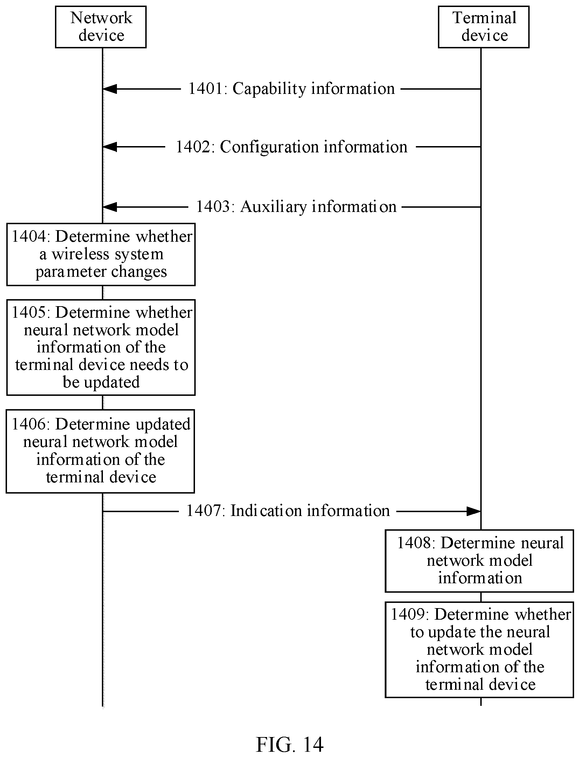

FIG. 14 is a schematic diagram of another neural network parameter indication method according to an embodiment of this application. In this embodiment, the network device pre-configures the following information for the terminal device:

(1) a neural network cascaded structure information candidate set;
(2) common layer network structure information; and
(3) a common layer network parameter.

Compared with Embodiment 4, in this embodiment, the network device does not pre-configure a dedicated layer network structure information candidate set and a dedicated layer network parameter candidate set for the terminal device.

Similar to Embodiment 1, a generation manner and a determining manner of each variable in this embodiment are shown in Table 6.

**Table 6**

| Variable | Neural network cascaded structure information | Common layer network structure information | Common layer network parameter | Dedicated layer network structure information | Dedicated layer network parameter |
|---|---|---|---|---|---|
| Generation manner | Selected from a neural network cascaded structure information candidate set pre-configured by the network device | Pre-configured by the network device | | Generated by the network device through online training | Generated by the network device through online training |
| Determining manner | Indicated by the network device | Pre-configured by the network device | | Indicated by the network device or generated by the terminal device through training | Indicated by the network device or generated by the terminal device through training |

As shown in FIG. 14, this embodiment includes the following steps.

Step 1401: A terminal device sends capability information to a network device. Correspondingly, the network device obtains (for example, receives) the capability information.

Before the network device pre-configures neural network model information for the terminal device, the terminal device can report capability information of the terminal device to the network device. The capability information includes one or more pieces of the following information: whether the terminal device supports using a neural network to replace or implement functions of some communication modules, whether the terminal device supports a neural network structure in which a common layer network and a dedicated layer network are cascaded, whether the terminal device supports receiving of the dedicated layer network structure information and the dedicated layer network parameter through signaling, a memory space for storing the common layer network structure information, the common layer network parameter, the dedicated layer network structure information, and the dedicated layer network parameter, and computing power information used to run the neural network.

Optionally, the network device pre-configures the neural network model information for the terminal device only when the terminal device supports the neural network structure in which the common layer network and the dedicated layer network are cascaded.

Step 1401 is an optional step. When step 1401 is not performed, the network device can always pre-configure the neural network model information for the terminal device without referring to the capability information of the terminal device.

Step 1402: The network device sends configuration information to the terminal device. Correspondingly, the terminal device obtains (for example, receives) the configuration information.

When the terminal device accesses a wireless network for the first time, the network device sends configuration information to the terminal device, where the configuration information carries neural network model information. The neural network model information includes a neural network cascaded structure information candidate set, common layer network structure information, and a common layer network parameter.

Optionally, the configuration information further carries index information. The index information includes an index of each neural network cascaded structure information.

Optionally, the configuration information further carries a third indication, and the third indication indicates default neural network cascaded structure information.

Step 1403 to step 1405 are the same as step 1203 to step 1205 in the embodiment corresponding to FIG. 12.

Step 1406: The network device determines updated neural network model information of the terminal device.

If the network device determines that the neural network model information of the terminal device needs to be updated, the network device continues to determine updated neural network model information of the terminal device.

The updated neural network model information of the terminal device includes:

(1) neural network cascaded structure information of the terminal device;
(2) dedicated layer network structure information of the terminal device; and
(3) a dedicated layer network parameter of the terminal device.

In the neural network model information generation manner shown in Table 6, the network device can determine neural network model information of the terminal device in the following method: The network device selects, from the neural network cascaded structure information candidate set pre-configured by the network device, neural network cascaded structure information corresponding to a current wireless system parameter of the terminal device, and obtains dedicated layer network structure information and a dedicated layer network parameter through online training (for example, through machine learning or neural network training) based on auxiliary information reported by the terminal device.

For example, the network device stores a mapping relationship table between a wireless system parameter and neural network cascaded structure information, and the network device can query the table based on the current wireless system parameter of the terminal device, to learn the neural network cascaded structure information corresponding to the current wireless system parameter of the terminal device. It should be noted that, in the mapping relationship table, the neural network cascaded structure information may be represented by using an index of the neural network cascaded structure information. In other words, the mapping relationship table may store a mapping relationship between the wireless system parameter and the index of the neural network cascaded structure information.

Further, the network device further determines indication information indicating the updated neural network model information. The indication information includes:

(1) an index of the neural network cascaded structure information of the terminal device;
(2) the dedicated layer network structure information of the terminal device; and
(3) the dedicated layer network parameter of the terminal device.

Based on the foregoing method, a neural network cascaded structure indicated by the index of the neural network cascaded structure information of the terminal device may be the neural network cascaded structure in FIG. 7, that is, one of the neural network cascaded structure information candidate set pre-configured by the network device.

Step 1407: The network device sends indication information to the terminal device. Correspondingly, the terminal device obtains (for example, receives) the indication information.

The indication information carries the following information:

(1) an index of the neural network cascaded structure information of the terminal device;
(2) the dedicated layer network structure information of the terminal device; and
(3) the dedicated layer network parameter of the terminal device.

Step 1408: The terminal device determines neural network model information.

The terminal device determines the neural network model information of the terminal device based on the indication information delivered by the network device, where the neural network model information includes the neural network cascaded structure information, the dedicated layer network structure information, and the dedicated layer network parameter. Further, the terminal device determines a neural network of the terminal device based on the neural network model information.

Step 1409 is the same as step 1209 in the embodiment corresponding to FIG. 12.

It should be noted that, in another implementation method, after step 1407, step 1408 and step 1409 are not performed, but step 907' is performed. For details, refer to the foregoing descriptions.

It should be noted that, in the foregoing embodiments, a communication system including the network device and the terminal device is used as an example for description. In another application scenario, the solution of this application may be further applied to a communication system including two or more terminal devices. In the foregoing embodiments, some or all operations performed by the network device may be performed by a terminal device serving as a transmit end, and operations performed by the terminal device in the foregoing embodiments may be performed by a terminal device serving as a receive end. Optionally, in the communication system including two or more terminal devices, a pre-configured operation of the neural network model information performed by the network device in Embodiment 4 to Embodiment 6 may still be performed by the network device, and another operation performed by the network device is performed by a terminal device at a transmit end of the communication system.

It should be noted that, in the foregoing embodiments, an example in which a protocol predefines or a network device pre-configures a set of common layer network structure information and a common layer network parameter is used for description. In another implementation method, a protocol may predefine or a network device may pre-configure two or more sets of common layer network structure information and common layer network parameters and then the network device indicates a selected set of common layer network structure information and common layer network parameter to the terminal device by using indication information. For a method for selecting the common layer network structure information and the common layer network parameter, refer to the method for selecting the dedicated layer network structure information and dedicated layer network parameter. Details are not described again.

With reference to the constellation neural network modulation module and the constellation neural network demodulation module in FIG. 6, the following specifically describes a method for using a neural network model provided in embodiments of this application.

(1) Constellation neural network modulation module

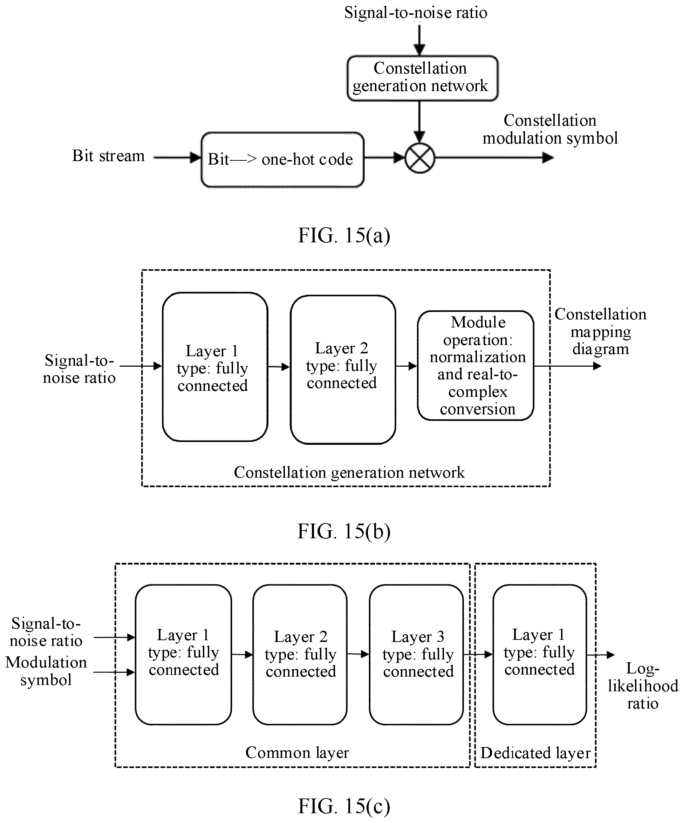

The constellation neural network modulation module maps a bit stream into a constellation modulation symbol. FIG. 15(a) is a schematic diagram of a structure of a constellation neural network modulation module. The module first maps the bit stream into a one-hot code. For example, for 4-order constellation modulation, if there are M=4 constellation points in a constellation diagram, every 2-bit information is mapped to a 4-bit one-hot code. A mapping relationship is shown in Table 7.

**Table 7**

| Bit information | One-hot code |
|---|---|
| 00 | [0, 0, 0, 1] |
| 01 | [0, 0, 1, 0] |
| 10 | [0, 1, 0, 0] |
| 11 | [1, 0, 0, 0] |

That is, the one-hot code uses M binary numbers to represent $\left[\log_2^M\right]$ bits, and each one-hot code has only one bit, which is 1. Then, a constellation generation network is modeled by using a neural network, where a structure thereof is shown in FIG. 15(b).

The constellation generation network uses two layers of fully-connected networks and a module for normalization and real-to-complex conversion. A total input of the constellation generation network is a working point signal-to-noise ratio, and a final output is a constellation diagram including M=4 constellation points, for example, $[y_1, y_2, y3, y_4]$, where a value of i in $y_i$ ranges from 1 to 4, which are constellation points. Specifically, referring to FIG. 15(b), using M=2 as an example, a fully connected layer 1 (layer 1 for short) maps one input value (a signal-to-noise ratio) to eight output values, a fully connected layer 2 (layer 2 for short) maps eight input values to eight output values, a module for real-to-complex conversion maps eight inputs to four outputs, and the final four outputs form a constellation diagram including four points, which is represented as $[y_1, y_2, y_3, y_4]$. A constellation modulation symbol corresponding to each input (that is, bit information in a left column in Table 1) may be obtained by performing point multiplication on the constellation diagram $[y_1, y_2, y_3, y_4]$ and the one-hot code obtained through the foregoing transformation.

(2) Constellation neural network demodulation module

The constellation neural network demodulation module demodulates a modulation symbol into a log-likelihood ratio. FIG. 15(c) is a schematic diagram of a structure of a constellation neural network demodulation module. A total input of the module is a working point signal-to-noise ratio and a received modulation symbol, and a final output is a log-likelihood ratio. The entire demodulation network is divided into a common layer and a dedicated layer. The common layer includes three fully connected layers, and input and output dimensions and an activation function are shown in FIG. 15(c). The dedicated layer uses a fully connected layer, and an output dimension is a quantity of bits corresponding to each modulation symbol, that is, $\log_2^M$ . For different wireless parameters, the common layer and the dedicated layer may use different structures and parameters, as described in the foregoing embodiments.

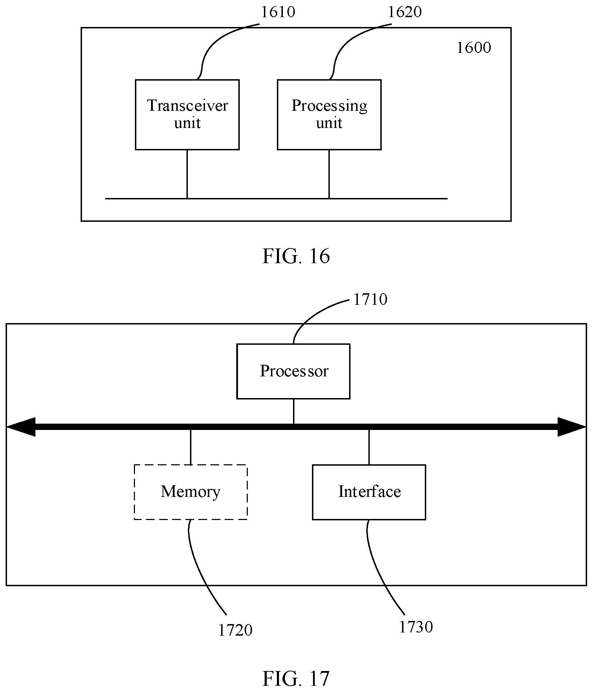

FIG. 16 is a schematic diagram of a communication apparatus according to an embodiment of this application. The communication apparatus 1600 includes a transceiver unit 1610 and a processing unit 1620.

In a first embodiment, the communication apparatus is configured to implement steps corresponding to the second device, the receive end, or the terminal device in the foregoing embodiments.

The transceiver unit 1610 is configured to obtain (for example, receive) indication information from a first device, where the indication information indicates information about a first neural network model, the first neural network model includes a dedicated layer network and a common layer network, the dedicated layer network is dedicated to the first neural network model, and the common layer network is a common network of the first neural network model and a second neural network model; and the processing unit 1620 is configured to determine the information about the first neural network model based on the indication information.

In a possible implementation method, the information about the first neural network model includes at least one of the following: neural network cascaded structure information, common layer network structure information, a common layer network parameter, dedicated layer network structure information, and a dedicated layer network parameter.

In a possible implementation method, that the information about the first neural network model includes the neural network cascaded structure information includes: the information about the first neural network model indicates the neural network cascaded structure, or the information about the first neural network model indicates a configured neural network cascaded structure from a neural network cascaded structure candidate set.

In a possible implementation method, that the information about the first neural network model includes the common layer network structure information includes: the information about the first neural network model indicates the common layer network structure, or the information about the first neural network model indicates a configured common layer network structure from a common layer network structure candidate set.

In a possible implementation method, that the information about the first neural network model includes common layer network parameter information includes: the information about the first neural network model indicates the common layer network parameter, or the information about the first neural network model indicates a configured common layer network parameter from a common layer network parameter candidate set.

In a possible implementation method, that the information about the first neural network model includes the dedicated layer network structure information includes: the information about the first neural network model indicates the dedicated layer network structure, or the information about the first neural network model indicates a configured dedicated layer network structure from a dedicated layer network structure candidate set.

In a possible implementation method, that the information about the first neural network model includes dedicated layer network parameter information includes: the information about the first neural network model indicates the dedicated layer network parameter, or the information about the first neural network model indicates a configured dedicated layer network parameter from a dedicated layer network parameter candidate set.

In a possible implementation method, the transceiver unit 1610 is further configured to obtain (for example, receive) configuration information from the first device, where the configuration information indicates one or more of the following content: a neural network cascaded structure information candidate set, a common layer network structure information candidate set, the common layer network parameter candidate set, a dedicated layer network structure information candidate set, and the dedicated layer network parameter candidate set.

In a possible implementation method, the transceiver unit 1610 is further configured to send auxiliary information to the first device, where the auxiliary information indicates a wireless system parameter for a communication between the first device and a second device.

In a possible implementation method, the transceiver unit 1610 is further configured to send capability information to the first device, where the capability information indicates one or more pieces of the following information:

(1) whether to support using a neural network to replace or implement a function of a communication module;

(2) whether to support a neural network structure in which the common layer network and the dedicated layer network are cascaded;

(3) whether to support receiving of the dedicated layer network structure information and the dedicated layer network parameter through signaling;

(4) stored dedicated layer network structure information predefined in a protocol or pre-configured;

(5) a stored dedicated layer network parameter predefined in the protocol or pre-configured;

(6) a memory space used to store the neural network cascaded structure information, the common layer network structure information, the common layer network parameter, the dedicated layer network structure information, and the dedicated layer network parameter; and

(7) computing power information used to run the neural network.

In a second embodiment, the communication apparatus is configured to implement steps corresponding to the first device, the transmit end, the terminal device, or the network device in the foregoing embodiments.

The processing unit 1620 is configured to determine indication information, where the indication information indicates information about a first neural network model, the first neural network model includes a dedicated layer network and a common layer network, the dedicated layer network is dedicated to the first neural network model, and the common layer network is a common network of the first neural network model and a second neural network model; and the transceiver unit 1610 is configured to send the indication information to a second device.

In a possible implementation method, the information about the first neural network model is the same as that described above, and details are not described herein again.

In a possible implementation method, the transceiver unit 1610 is further configured to send configuration information to the second device, where the configuration information indicates one or more of the following content: a neural network cascaded structure information candidate set, a common layer network structure information candidate set, the common layer network parameter candidate set, a dedicated layer network structure information candidate set, and the dedicated layer network parameter candidate set.

In a possible implementation method, the transceiver unit 1610 is further configured to obtain (for example, receive) auxiliary information from the second device, where the auxiliary information indicates a wireless system parameter for a communication between a first device and the second device.

In a possible implementation method, the transceiver unit 1610 is further configured to obtain (for example, receive) capability information from the second device. The capability information is the same as that described above, and details are not described again.

Optionally, the communication apparatus may further include a storage unit. The storage unit is configured to store data or instructions (which may also be referred to as code or programs). The foregoing units may interact with or be coupled to the storage unit, to implement a corresponding method or function. For example, the processing unit 1620 may read the data or the instructions in the storage unit, so that the communication apparatus implements the method in the foregoing embodiments. The coupling in embodiments of this application may be an indirect coupling or a communication connection between apparatuses, units, or modules in an electrical form, a mechanical form, or another form, and is used for information exchange between the apparatuses, the units, or the modules.

In embodiments of this application, division of the units in the communication apparatus is merely logical function division. During actual implementation, all or some of the units may be integrated into one physical entity or may be physically separated. In addition, all the units in the communication apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the communication apparatus for implementation. In addition, each unit may alternatively be stored in a memory in a form of a program to be invoked by a processing element of the communication apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing communication apparatuses may be one or more integrated circuits configured to implement the foregoing methods, for example, one or more application specific integrated circuits (application specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the units in the communication apparatus may be implemented in a form of scheduling a program by a processing element, the processing element may be a general purpose processor, for example, a central processing unit (central processing unit, CPU) or another processor that can invoke the program. For still another example, the units may be integrated and implemented in a form of a system-on-a-chip (system-on-a-chip, SOC).

FIG. 17 is a schematic diagram of a communication apparatus according to an embodiment of this application. The communication apparatus is configured to implement operations of the first device (that is, a transmit end, which may be specifically a network device or a terminal device) or the second device (that is, a receive end, which may be specifically a terminal device) in the foregoing embodiments. As shown in FIG. 17, the communication apparatus includes a processor 1710 and an interface 1730. Optionally, the communication apparatus further includes a memory 1720. The interface 1730 is configured to communicate with another device. In embodiments of this application, the interface may also be referred to as a communication interface, and a specific form of the interface may be a transceiver, a circuit, a bus, a module, a pin, or a communication interface of another type.

In the foregoing embodiments, the method performed by the first device or the second device may be implemented by the processor 1710 by invoking a program stored in a memory (which may be the memory 1720 in the first device or the second device, or may be an external memory). That is, the first device or the second device may include the processor 1710, and the processor 1710 invokes the program in the memory to perform the method performed by the first device or the second device in the foregoing method embodiments. The processor herein may be an integrated circuit having a signal processing capability, for example, a CPU. The first device or the second device may be implemented by using one or more integrated circuits configured to implement the foregoing method, for example, one or more ASICs, one or more microprocessors DSPs, one or more FPGAs, or a combination of at least two of the integrated circuit forms. Alternatively, the foregoing implementations may be combined.

Specifically, functions/implementation processes of the transceiver unit 1610 and the processing unit 1620 in FIG. 16 may be implemented by the processor 1710 in the communication apparatus 1700 shown in FIG. 17 by invoking computer-executable instructions stored in the memory 1720. Alternatively, a function/an implementation process of the processing unit 1620 in FIG. 16 may be implemented by the processor 1710 in the communication apparatus 1700 shown in FIG. 17 by invoking computer-executable instructions stored in the memory 1720, and a function/an implementation process of the transceiver unit 1610 in FIG. 16 may be implemented by the interface 1730 in the communication apparatus 1700 shown in FIG. 17. For example, the function/the implementation process of the transceiver unit 1610 may be implemented by a processor by invoking program instructions in the memory to drive the interface 1730.

In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory) such as a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

A person skilled in the art may understand that first, second, and various reference numerals in embodiments of this application are for distinguishing only for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. The term "a plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

All or a part of the technical solutions provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general purpose computer, a dedicated computer, a computer network, a terminal device, a network device, an artificial intelligence device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid-state drive (solid-state disk, SSD)), or the like.

In embodiments of this application, the embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A communication method, comprising:

   obtaining indication information from a first device, wherein the indication information indicates information about a first neural network model, the first neural network model comprises a dedicated layer network and a common layer network, the dedicated layer network is dedicated to the first neural network model, and the common layer network is a common network of the first neural network model and a second neural network model; and
   determining the information about the first neural network model based on the indication information.

2. The method according to claim 1, wherein the information about the first neural network model comprises at least one of the following: neural network cascaded structure information, common layer network structure information, a common layer network parameter, dedicated layer network structure information, and a dedicated layer network parameter.

3. The method according to claim 2, wherein that the information about the first neural network model comprises the neural network cascaded structure information comprises:

   the information about the first neural network model indicates the neural network cascaded structure; or
   the information about the first neural network model indicates a configured neural network cascaded structure from a neural network cascaded structure candidate set.

4. The method according to claim 2 or 3, wherein that the information about the first neural network model comprises the common layer network structure information comprises:

   the information about the first neural network model indicates the common layer network structure; or
   the information about the first neural network model indicates a configured common layer network structure from a common layer network structure candidate set.

5. The method according to any one of claims 2 to 4, wherein that the information about the first neural network model comprises common layer network parameter information comprises:

   the information about the first neural network model indicates the common layer network parameter; or
   the information about the first neural network model indicates a configured common layer network parameter from a common layer network parameter candidate set.

6. The method according to any one of claims 2 to 5, wherein that the information about the first neural network model comprises the dedicated layer network structure information comprises:

the information about the first neural network model indicates the dedicated layer network structure; or
the information about the first neural network model indicates a configured dedicated layer network structure from a dedicated layer network structure candidate set.

7. The method according to any one of claims 2 to 5, wherein that the information about the first neural network model comprises dedicated layer network parameter information comprises:

the information about the first neural network model indicates the dedicated layer network parameter; or
the information about the first neural network model indicates a configured dedicated layer network parameter from a dedicated layer network parameter candidate set.

8. The method according to any one of claims 1 to 7, further comprising:
receiving configuration information from the first device, wherein the configuration information indicates one or more of the following content: a neural network cascaded structure information candidate set, a common layer network structure information candidate set, the common layer network parameter candidate set, a dedicated layer network structure information candidate set, and the dedicated layer network parameter candidate set.

9. The method according to any one of claims 1 to 8, further comprising:
sending auxiliary information to the first device, wherein the auxiliary information indicates a wireless system parameter for a communication between the first device and a second device.

10. The method according to any one of claims 1 to 9, further comprising:
sending capability information to the first device, wherein the capability information indicates one or more pieces of the following information:

(1) whether to support using a neural network to replace or implement a function of a communication module;
(2) whether to support a neural network structure in which the common layer network and the dedicated layer network are cascaded;
(3) whether to support receiving of the dedicated layer network structure information and/or the dedicated layer network parameter through signaling;
(4) stored dedicated layer network structure information predefined in a protocol or pre-configured;
(5) a stored dedicated layer network parameter predefined in the protocol or pre-configured;
(6) a memory space used to store the neural network cascaded structure information, the common layer network structure information, the common layer network parameter, the dedicated layer network structure information, and/or the dedicated layer network parameter; and
(7) computing power information used to run the neural network.

11. A communication method, comprising:

obtaining first indication information from a first device, wherein the first indication information indicates common information of a first neural network model, the first neural network model comprises a dedicated layer network and a common layer network, and the common information of the first neural network model comprises information about the common layer network; and
obtaining second indication information from the first device, wherein the second indication information indicates information about the dedicated layer network.

12. The method according to claim 11, wherein the information about the common layer network comprises common layer network structure information and/or a common layer network parameter.

13. The method according to claim 11 or 12, wherein the information about the dedicated layer network comprises at least one of the following: neural network cascaded structure information, dedicated layer network structure information, and a dedicated layer network parameter.

14. The method according to any one of claims 11 to 13, wherein the first indication information is carried in a broadcast message, a system message, or a common message.

15. The method according to any one of claims 11 to 14, wherein the second indication information is carried in radio resource control RRC signaling specific to a second device, a medium access control control element MAC CE, or downlink control information DCI.

16. A communication method, comprising:

determining indication information, wherein the indication information indicates information about a first neural network model, the first neural network model comprises a dedicated layer network and a common layer network, the dedicated layer network is dedicated to the first neural network model, and the common layer network is a common network of the first neural network model and a second neural network model; and
sending the indication information to a second device.

17. The method according to claim 16, wherein the information about the first neural network model comprises at least one of the following: neural network cascaded structure information, common layer network structure information, a common layer network parameter, dedicated layer network structure information, and a dedicated layer network parameter.

18. The method according to claim 16 or 17, further comprising:
sending configuration information to the second device, wherein the configuration information indicates one or more of the following content: a neural network cascaded structure information candidate set, a common layer network structure information candidate set, a common layer network parameter candidate set, a dedicated layer network structure information candidate set, and a dedicated layer network parameter candidate set.

19. The method according to any one of claims 16 to 18, further comprising:
receiving auxiliary information from the second device, wherein the auxiliary information indicates a wireless system parameter for a communication between a first device and the second device.

20. The method according to any one of claims 16 to 19, further comprising:
receiving capability information from the second device, wherein the capability information indicates one or more pieces of the following information:

(1) whether to support using a neural network to replace or implement a function of a communication module;
(2) whether to support a neural network structure in which the common layer network and the dedicated layer network are cascaded;
(3) whether to support receiving of the dedicated layer network structure information and the dedicated layer network parameter through signaling;
(4) stored dedicated layer network structure information predefined in a protocol or pre-configured;
(5) a stored dedicated layer network parameter predefined in the protocol or pre-configured;
(6) a memory space used to store the neural network cascaded structure information, the common layer network structure information, the common layer network parameter, the dedicated layer network structure information, and the dedicated layer network parameter; and
(7) computing power information used to run the neural network.

21. A communication method, comprising:

sending first indication information to a second device, wherein the first indication information indicates common information of a first neural network model, the first neural network model comprises a dedicated layer network and a common layer network, and the common information of the first neural network model comprises information about the common layer network; and
sending second indication information to the second device, wherein the second indication information indicates information about the dedicated layer network.

22. A communication apparatus, configured to perform the method according to any one of claims 1 to 15.

23. A communication apparatus, comprising a processor and a memory, wherein the memory is coupled to the processor, and the processor is configured to perform the method according to any one of claims 1 to 15.

24. A communication apparatus, comprising a processor and a communication interface, wherein

the processor is configured to receive indication information from a first device through the communication interface, wherein the indication information indicates information about a first neural network model, the first neural network model comprises a dedicated layer network and a common layer network, the dedicated layer network is dedicated to the first neural network model, and the common layer network is a common network of the first neural network model and a second neural network model; and

the processor is configured to determine the information about the first neural network model based on the indication information.

25. A communication apparatus, configured to perform the method according to any one of claims 16 to 21.

26. A communication apparatus, comprising a processor and a memory, wherein the memory is coupled to the processor, and the processor is configured to perform the method according to any one of claims 16 to 21.

27. A communication apparatus, comprising a processor and a communication interface, wherein

the processor is configured to determine indication information, wherein the indication information indicates information about a first neural network model, the first neural network model comprises a dedicated layer network and a common layer network, the dedicated layer network is dedicated to the first neural network model, and the common layer network is a common network of the first neural network model and a second neural network model; and

the processor is configured to send the indication information to a second device through the communication interface.

28. A computer program product comprising instructions, wherein when the computer program product is run on a computer, the computer is enabled to perform the method according to any one of claims 1 to 21.

29. A computer-readable storage medium, storing instructions, wherein when the instructions are run on a computer, the computer is enabled to perform the method according to any one of claims 1 to 21.

30. A communication system, comprising the communication apparatus according to any one of claims 22 to 24 and/or the communication apparatus according to any one of claims 25 to 27.

Neuron

$$y = f\left(\sum_{i=0}^{n} w_i x_i + b\right)$$

$w_0 x_0$

$w_1 x_1$

$w_n x_n$

$y$

FIG. 1

Neuron    Layer

Weight

Input layer

Hidden layer

Output layer

FIG. 2

Convolutional layer　　　Pooling layer　　Fully connected layer

Sun: 0.7
Moon: 0.1
Car: 0.05
House: 0.02

FIG. 3

Sequence output

Sequence input

FIG. 4

FIG. 5

FIG. 6

FIG. 7

FIG. 8(a)

```
┌──────────┐                              ┌──────────┐
│  First   │                              │  Second  │
│  device  │                              │  device  │
└──────────┘                              └──────────┘
     │                                          │
     │    801b: First indication information    │
     │─────────────────────────────────────────▶│
     │                                          │
     │                                          │
     │   802b: Second indication information     │
     │─────────────────────────────────────────▶│
     │                                          │
```

FIG. 8(b)

FIG. 9

Network
device

Terminal
device

1001: Capability information

1002: Auxiliary information

1003: Determine whether
a wireless system
parameter changes

1004: Determine whether
neural network model
information of the
terminal device needs to
be updated

1005: Determine updated
neural network model
information of the
terminal device

1006: Indication information

1007: Determine neural
network model
information

1008: Determine whether
to update the neural
network model
information of the
terminal device

FIG. 10

```
┌──────────┐                                          ┌──────────┐
│ Network  │                                          │ Terminal │
│ device   │                                          │ device   │
└──────────┘                                          └──────────┘
     │                                                      │
     │◄──────── 1101: Capability information ───────────────│
     │                                                      │
     │◄──────── 1102: Auxiliary information ────────────────│
     │                                                      │
┌────┴─────────────┐                                        │
│ 1103: Determine  │                                        │
│ whether a        │                                        │
│ wireless system  │                                        │
│ parameter changes│                                        │
└────┬─────────────┘                                        │
┌────┴─────────────┐                                        │
│ 1104: Determine  │                                        │
│ whether neural   │                                        │
│ network model    │                                        │
│ information of the│                                       │
│ terminal device  │                                        │
│ needs to be      │                                        │
│ updated          │                                        │
└────┬─────────────┘                                        │
┌────┴─────────────┐                                        │
│ 1105: Determine  │                                        │
│ updated neural   │                                        │
│ network model    │                                        │
│ information of the│                                       │
│ terminal device  │                                        │
└────┬─────────────┘                                        │
     │────────── 1106: Indication information ─────────────►│
     │                                            ┌─────────┴────────┐
     │                                            │ 1107: Determine  │
     │                                            │ neural network   │
     │                                            │ model information │
     │                                            └─────────┬────────┘
     │                                            ┌─────────┴────────┐
     │                                            │ 1108: Determine  │
     │                                            │ whether to update │
     │                                            │ the neural network│
     │                                            │ model information │
     │                                            │ of the terminal  │
     │                                            │ device           │
     │                                            └─────────┬────────┘
     │                                                      │
```

FIG. 11

```
┌─────────────┐                              ┌─────────────┐
│  Network    │                              │  Terminal   │
│  device     │                              │  device     │
└─────────────┘                              └─────────────┘
       │                                            │
       │◄──────── 1201: Capability information ──────│
       │                                            │
       │◄──────── 1202: Configuration information ───│
       │                                            │
       │◄──────── 1203: Auxiliary information ───────│
       │                                            │
┌──────────────────┐                                │
│ 1204: Determine  │                                │
│ whether a        │                                │
│ wireless system  │                                │
│ parameter changes│                                │
└──────────────────┘                                │
┌──────────────────┐                                │
│ 1205: Determine  │                                │
│ whether neural   │                                │
│ network model    │                                │
│ information of the│                               │
│ terminal device  │                                │
│ needs to be      │                                │
│ updated          │                                │
└──────────────────┘                                │
┌──────────────────┐                                │
│ 1206: Determine  │                                │
│ updated neural   │                                │
│ network model    │                                │
│ information of the│                               │
│ terminal device  │                                │
└──────────────────┘                                │
       │────── 1207: Indication information ────────►│
       │                                            │
       │                                   ┌──────────────────┐
       │                                   │ 1208: Determine  │
       │                                   │ neural network   │
       │                                   │ model information │
       │                                   └──────────────────┘
       │                                   ┌──────────────────┐
       │                                   │ 1209: Determine  │
       │                                   │ whether to update │
       │                                   │ the neural network│
       │                                   │ model information │
       │                                   │ of the terminal  │
       │                                   │ device           │
       │                                   └──────────────────┘
```

FIG. 12

```
┌──────────┐                                              ┌──────────┐
│ Network  │                                              │ Terminal │
│ device   │                                              │ device   │
└────┬─────┘                                              └────┬─────┘
     │                                                         │
     │◄────────── 1301: Capability information ──────────────  │
     │                                                         │
     │◄────────── 1302: Configuration information ──────────   │
     │                                                         │
     │◄────────── 1303: Auxiliary information ──────────────   │
┌────┴──────────────┐                                          │
│ 1304: Determine   │                                          │
│ whether a wireless │                                         │
│ system parameter  │                                          │
│ changes           │                                          │
└────┬──────────────┘                                          │
┌────┴──────────────┐                                          │
│ 1305: Determine   │                                          │
│ whether neural    │                                          │
│ network model     │                                          │
│ information of the │                                         │
│ terminal device   │                                          │
│ needs to be updated│                                         │
└────┬──────────────┘                                          │
┌────┴──────────────┐                                          │
│ 1306: Determine   │                                          │
│ updated neural    │                                          │
│ network model     │                                          │
│ information of the │                                         │
│ terminal device   │                                          │
└────┬──────────────┘                                          │
     │────────── 1307: Indication information ──────────────►  │
     │                                               ┌─────────┴─────────┐
     │                                               │ 1308: Determine    │
     │                                               │ neural network     │
     │                                               │ model information   │
     │                                               └─────────┬─────────┘
     │                                               ┌─────────┴─────────┐
     │                                               │ 1309: Determine    │
     │                                               │ whether to update  │
     │                                               │ the neural network │
     │                                               │ model information   │
     │                                               │ of the terminal    │
     │                                               │ device             │
     │                                               └─────────┬─────────┘
     │                                                         │
```

FIG. 13

EP 4 220 484 A1

Network device / Terminal device

1401: Capability information

1402: Configuration information

1403: Auxiliary information

1404: Determine whether a wireless system parameter changes

1405: Determine whether neural network model information of the terminal device needs to be updated

1406: Determine updated neural network model information of the terminal device

1407: Indication information

1408: Determine neural network model information

1409: Determine whether to update the neural network model information of the terminal device

FIG. 14

53

Signal-to-noise ratio

↓

Constellation
generation network

Bit stream → Bit—> one-hot code → ⊗ → Constellation modulation symbol

FIG. 15(a)

Signal-to-noise ratio → | Layer 1 type: fully connected | → | Layer 2 type: fully connected | → | Module operation: normalization and real-to-complex conversion | → Constellation mapping diagram

Constellation generation network

FIG. 15(b)

Signal-to-noise ratio
Modulation symbol

→ | Layer 1 type: fully connected | → | Layer 2 type: fully connected | → | Layer 3 type: fully connected | → | Layer 1 type: fully connected | → Log-likelihood ratio

Common layer    Dedicated layer

FIG. 15(c)

1610          1620

1600

Transceiver unit

Processing unit

FIG. 16

1710

Processor

Memory

Interface

1720

1730

FIG. 17

## INTERNATIONAL SEARCH REPORT

| | International application No. |
|---|---|
| | **PCT/CN2020/122289** |

**A. CLASSIFICATION OF SUBJECT MATTER**

G06N 3/02(2006.01)i; H04L 29/06(2006.01)i

According to International Patent Classification (IPC) or to both national classification and IPC

**B. FIELDS SEARCHED**

Minimum documentation searched (classification system followed by classification symbols)

G06N; H04L; H04W

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 神经网, 级联, 层, 通用, 共用, 公用, 专用, 指示, 通知, neural network, CNN, GNN, RNN, FNN, DNN, cascade, layer, public, share, dedicate, indicate, notify, message, RRC, broadcast, SIB, MIB

**C. DOCUMENTS CONSIDERED TO BE RELEVANT**

| Category* | Citation of document, with indication, where appropriate, of the relevant passages | Relevant to claim No. |
|---|---|---|
| A | WO 2020167641 A1 (SIEMENS AKTIENGESELLSCHAFT) 20 August 2020 (2020-08-20) description, paragraphs 17-30 | 1-30 |
| A | CN 111628946 A (HUAWEI TECHNOLOGIES CO., LTD.) 04 September 2020 (2020-09-04) entire document | 1-30 |
| A | CN 111294284 A (HUAWEI TECHNOLOGIES CO., LTD. et al.) 16 June 2020 (2020-06-16) entire document | 1-30 |
| A | WO 2018149898 A2 (ALCATEL LUCENT IRELAND LTD.) 23 August 2018 (2018-08-23) entire document | 1-30 |
| A | CN 108694441 A (SHANGHAI CAMBRICON INFORMATION TECHNOLOGY CO., LTD.) 23 October 2018 (2018-10-23) entire document | 1-30 |
| A | SHEN, Tengfei et al. "Layered_CasPer: Layered cascade artificial neural networks" *WCCI 2012 IEEE World congress on Computational Intelligence,* 15 June 2012 (2012-06-15), entire document | 1-30 |
| A | WO 2020043545 A1 (KONINKLIJKE PHILIPS N.V.) 05 March 2020 (2020-03-05) entire document | 1-30 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 July 2021** | **27 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/122289**

| Patent document cited in search report | | | Publication date (day/month/year) | Patent family member(s) | | | Publication date (day/month/year) |
|---|---|---|---|---|---|---|---|
| WO | 2020167641 | A1 | 20 August 2020 | CN | 111563588 | A | 21 August 2020 |
| | | | | EP | 3696733 | A1 | 19 August 2020 |
| | | | | US | 2020254609 | A1 | 13 August 2020 |
| CN | 111628946 | A | 04 September 2020 | None | | | |
| CN | 111294284 | A | 16 June 2020 | None | | | |
| WO | 2018149898 | A2 | 23 August 2018 | US | 2020015101 | A1 | 09 January 2020 |
| | | | | CN | 110521234 | A | 29 November 2019 |
| | | | | EP | 3583797 | A2 | 25 December 2019 |
| | | | | WO | 2018149898 | A3 | 13 December 2018 |
| CN | 108694441 | A | 23 October 2018 | None | | | |
| WO | 2020043545 | A1 | 05 March 2020 | EP | 3617953 | A1 | 04 March 2020 |

Form PCT/ISA/210 (patent family annex) (January 2015)